(19) Europäisches Patentamt
European Patent Office
Office européen des brevets

(11) Veröffentlichungsnummer : **0 051 559**
**B1**

(12) # EUROPÄISCHE PATENTSCHRIFT

(45) Veröffentlichungstag der Patentschrift : **07.11.84**

(21) Anmeldenummer : **81810316.0**

(22) Anmeldetag : **05.08.81**

(51) Int. Cl.[3] : **C 09 B 43/136**, C 09 B 62/09, C 09 B 44/02// D06P1/02, D21H1/46

(54) **Basische bzw. kationische, sulfonsäuregruppenfreie Azoverbindungen.**

(30) Priorität : **09.08.80 DE 3030196**

(43) Veröffentlichungstag der Anmeldung : **12.05.82 Patentblatt 82/19**

(45) Bekanntmachung des Hinweises auf die Patenterteilung : **07.11.84 Patentblatt 84/45**

(84) Benannte Vertragsstaaten : **AT BE CH DE FR IT LI NL SE**

(56) Entgegenhaltungen :
**US-A- 3 910 876**
**US-A- 3 987 022**
**Die Akte enthält technische Angaben, die nach dem Eingang der Anmeldung eingereicht wurden und die nicht in dieser Patentschrift enthalten sind.**

(73) Patentinhaber : **SANDOZ AG**
**Lichtstrasse 35**
**CH-4002 Basel (CH)**

(72) Erfinder : **Pedrazzi, Reinhard**
**Grabenmattweg 59/7**
**CH-4123 Allschwil (CH)**

**EP 0 051 559 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft basische und/oder kationische Gruppen enthaltende, von Sulfonsäuregruppen freie Azoverbindungen, ihre Säureadditionssalze, Verfahren zur Herstellung und ihre Verwendung als Farbstoffe. Im engeren Sinne sind Gegenstand der Erfindung basische und/oder kationische Gruppen enthaltende, sulfonsäuregruppenfreie Dis-, Tris- oder Tetrakisazoverbindungen, die der Formel I

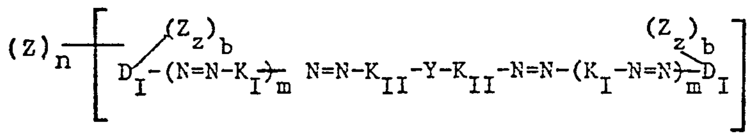

(I)

entsprechen, worin

$D_I$ als Rest einer Diazokomponente unabhängig voneinander einen unsubstituierten oder substituierten Anilin- oder Naphthylaminrest,

$K_I$ als Rest einer Kupplungs-/Diazokomponente unabhängig voneinander einen unsubstituierten oder substituierten Anilin- oder Naphthylaminrest und

$K_{II}$ als Rest einer Kupplungskomponente unabhängig voneinander einen unsubstituierten oder substituierten Anilin- oder Naphthylaminrest bedeuten ;

m unabhängig voneinander 0 oder 1 ist ;

Y für ein Brückenglied steht, das an die gegebenenfalls substituierte Aminogruppe eines jeden Restes $K_{II}$ gebunden ist und zwar in anderer Form als über zwei endständige Alkylengruppen ;

n mindestens 1 ist und

b für 0, 1 oder 2 steht ;

Z unabhängig voneinander eine der folgenden Bedeutungen hat

i) als

$-CO-X$, $-SO_2-X$; 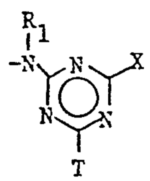 oder 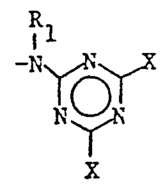 ;

ii) als kationische Gruppe

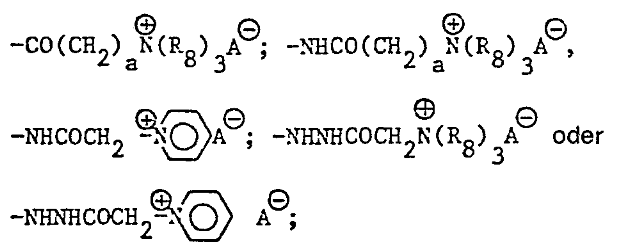

iii) als basische Gruppe

$-CO(CH_2)_aN(R_8)_2$, $-NHCO(CH_2)_aN(R_8)_2$ oder $-NHNHCOCH_2N(R_8)_2$,

worin

$R_1$ für Wasserstoff oder (1-4C)Alkyl,

T für Halogen, Hydroxy, $NH_2$, einen aliphatischen oder aromatischen Aminrest oder einen gesättigten heterocyclischen Aminrest, in welchem das N-Atom in den Heterocyclus einbezogen ist, stehen,

X unabhängig voneinander eine basische Gruppe $-NR_2-Q-NR_3R_4$ oder eine kationische Gruppe $-NR_2-Q-\overset{\oplus}{N}R_5R_6R_7A^{\ominus}$,

Q lineares oder verzweigtes (2-6C)Alkylen oder $-NHCOCH_2-$,

$R_2$ Wasserstoff oder (1-4C)Alkyl,

$R_3$ und $R_4$ unabhängig voneinander Wasserstoff, unsubstituiertes (1-6C)Alkyl, durch Hydroxy oder Cyano substituiertes (2-6C)Alkyl, Phenyl-(1-3C)-alkyl, dessen Phenylrest durch 1 bis 3 Substituenten aus der Reihe Chlor, (1-4C)Alkyl und (1-4C)Alkoxy substituiert sein kann, unsubstituiertes oder durch 1 bis 3 (1-4C)Alkylgruppen substituiertes (5-6C)Cycloalkyl bedeuten oder

$R_3$ und $R_4$ zusammen mit dem an sie gebundenen N-Atom einen 5- oder 6-gliedrigen, gegebenenfalls ein weiteres Heteroatom einschliessenden, gesättigten oder ungesättigten Ring bilden,

$R_5$ und $R_6$ unabhängig voneinander eine der Bedeutungen von $R_3$ und $R_4$ ausgenommen Wasserstoff haben und

$R_7$ (1-4C)Alkyl oder Benzyl bedeutet oder

$R_5$, $R_6$ und $R_7$ zusammen mit dem an sie gebundenen N-Atom ein Pyridiniumkation bilden, das gegebenenfalls durch 1 oder 2 Methylgruppen substituiert ist ;

a für 1, 2 oder 3,

$R_8$ für (1-4C)Alkyl und

$A^{\ominus}$ für ein nichtchromophores Anion stehen und

$Z_z$ unabhängig voneinander die Gruppe

$-(CH_2)_a\overset{\oplus}{N}(R_8)_3\ A^{\ominus}$, $-(CH_2)_a$ 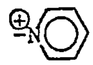 $A^{\ominus}$ oder $-\overset{\oplus}{N}(R_8)_3\ A^{\ominus}$

bedeutet, worin a, $R_8$ and $A^{\ominus}$ wie oben definiert sind, Säureadditionssalze der Verbindungen der Formel I und Gemische davon.

Bevorzugt steht b für 0.

In einer Verbindung der Formel I liegen vorzugsweise insgesamt 1-8, weiter bevorzugt 1-6 und insbesondere bevorzugt 2-4 Gruppen Z vor ; die bevorzugten Disazoverbindungen der Formel I enthalten besonders bevorzugt 2 basische bzw. kationische Gruppen Z, die gleich oder verschieden sein können und vorzugsweise gleich sind.

Q als Alkylen stellt einen linearen Rest $-(CH_2)_{2-6}-$ dar, es kann aber auch verzweigt sein und dann beispielsweise als

$-\underset{CH_3}{CH}-CH_2-$, $-CH_2-\underset{CH_3}{CH}-$ oder $-CH_2-\underset{CH_3}{CH}-CH_2-$

vorliegen, vorzugsweise steht es für einen unverzweigten Alkylenrest und besonders bevorzugt für einen Aethylen- oder Propylenrest, insbesondere für einen Propylenrest.

Q steht vorzugsweise für Q' als linearer oder verzweigter (2-6C)Alkylenrest ; weiter bevorzugt ist Q ein linearer (2-6C)Alkylenrest ; insbesondere ein Aethylen- oder 1,3-Propylenrest, davon weiter bevorzugt ein 1,3-Propylenrest.

Die Reste $R_1$ und $R_2$ als Alkyl stehen bevorzugt für Methyl.

$R_1$ bzw. $R_2$ steht bevorzugt für $R_1'$ bzw. $R_2'$ in der Bedeutung von Wasserstoff oder Methyl, insbesondere für Wasserstoff.

Die Reste $R_3$ und $R_4$ können gleich oder verschieden sein und sind vorzugsweise identisch. Als (1-6C)Alkylreste können sie linear oder verzweigt sein und stehen bevorzugt für (1-4C)Alkyl, insbesondere für Methyl oder Aethyl ; als cyano- oder hydroxysubstituierte (2-6C)Alkylreste bedeuten sie vorzugsweise substituiertes Aethyl oder Propyl, wobei der Substituent sich jedoch nicht in 1-Position befindet.

$R_3$ und $R_4$ als Phenylalkylreste bedeuten bevorzugt Benzyl ; vorzugsweise ist der Phenylrest unsubstituiert. Als Cycloalkyl steht bevorzugt Cyclohexyl ; alkylsubstituiertes Cycloalkyl ist vorzugsweise durch Methylgruppen substituiert.

Bilden $R_3$ und $R_4$ zusammen mit dem N-Atom einen Ring, so stellt dieser bevorzugt einen Pyrrolidin-, Piperidin- oder Morpholinring dar.

$R_3$ und $R_4$ stehen unabhängig voneinander bevorzugt für $R_3'$ und $R_4'$ in der Bedeutung von Wasserstoff, linearem oder verzweigtem (1-6C)Alkylrest, unverzweigtem Hydroxy-(2-3C)alkylrest, Benzyl oder sie bilden zusammen mit dem N-Atom einen Pyrrolidin-, Piperidin- oder Morpholinring ; weiter bevorzugt für $R_3''$ und $R_4''$ in der Bedeutung von Wasserstoff, linearem oder verzweigtem (1-4C)Alkyl, 2-Hydroxyäthyl oder zusammen mit dem N-Atom einem Piperidin- oder Morpholinring ; ganz besonders für $R_3'''$ und $R_4'''$ in der Bedeutung von Methyl oder Aethyl.

Die Reste $R_5$ und $R_6$ können gleich oder verschieden sein und sind vorzugsweise identisch.

$R_5$ und $R_6$ stehen bevorzugt unabhängig voneinander für $R_5'$ und $R_6'$ als lineares oder verzweigtes (1-6C)Alkyl, unverzweigtes Hydroxy-(2-3C)alkyl, Benzyl oder $R_5'$, $R_6'$ und $R_7'$ bilden zusammen mit dem N-Atom, an das sie gebunden sind, ein Pyridiniumkation, das durch ein oder zwei Methylgruppen substituiert sein kann ; weiter bevorzugt für $R_5''$ und $R_6''$ als lineares oder verzweigtes (1-4C)Alkyl, 2-Hydroxyäthyl oder zusammen mit dem N-Atom als Pyridiniumkation ; insbesondere bevorzugt für $R_5'''$ und $R_6'''$ als Methyl oder Aethyl.

$R_7$ als Alkyl steht bevorzugt für Methyl oder Aethyl, insbesondere für Methyl.

$R_7$ steht bevorzugt für $R_7'$ in der Bedeutung von Methyl, Aethyl oder Benzyl, insbesondere für Methyl, oder $R_7'$ bedeutet zusammen mit $R_5$, $R_6$ und dem N-Atom ein Pyridiniumkation.

X als basische Gruppe bedeutet bevorzugt Xa, weiter bevorzugt Xb, weiter bevorzugt Xc ; besonders bevorzugt bedeutet es Xd und insbesondere Xe, wobei

Xa für $-NR_2'-Q-NR_3'R_4'$ ;
Xb für $-NR_2'-Q'-NR_3''R_4''$ ;
Xc für $-NR_2'-(CH_2)_{2\text{-}6}-NR_3''R_4''$ ;
Xd für $-NR_2'-(CH_2)_{2\text{-}3}-NR_3'''R_4'''$ und
Xe für $-NH-(CH_2)_3-NR_3'''R_4'''$ stehen.

X als kationische Gruppe bedeutet bevorzugt Xf, weiter bevorzugt Xg, weiter bevorzugt Xh ; insbesondere bevorzugt Xi und ganz besonders bevorzugt Xj, wobei

Xf für $-NR_2'-Q-\overset{\oplus}{N}R_5'R_6'R_7'$ ;
Xg für $-NR_2'-Q'-\overset{\oplus}{N}R_5''R_6''R_7'$ ;
Xh für $-NR_2'-(CH_2)_{2\text{-}6}-\overset{\oplus}{N}R_5''R_6''R_7'$ ;
Xi für $-NR_2'-(CH_2)_{2\text{-}3}-\overset{\oplus}{N}R_5'''R_6'''R_7'$ und

Xj für $-NR_2'-(CH_2)_{2\text{-}3}-\overset{\oplus}{N}(CH_3)_3$ oder $-NR_2'-(CH_2)_{2\text{-}3}-$ 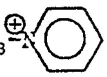
stehen.

Zu X als Kation $-NR_2-Q-\overset{\oplus}{N}R_5R_6R_7$ gehört ein beliebiges Anion $A^{\ominus}$, worunter sowohl organische als auch anorganische Ionen zu verstehen sind ; dabei stellt das Anion $A^{\ominus}$ keinen kritischen Faktor dar und soll auf jeden Fall nichtchromophoren Charakter haben ; beispielsweise kann $A^{\ominus}$ für ein Chlorid-, Bromid-, Jodid-, Lactat-, Acetat-, Formiat-, Citrat-, Methylsulfat-, Aethylsulfat- oder Hydrogensulfation stehen.

T als aliphatischer Aminrest stellt bevorzugt einen Monoalkyl- oder Dialkylaminrest, worin die Alkylgruppen 1-4 C-Atome enthalten und unverzweigt oder verzweigt, unsubstituiert oder substituiert sein können, wobei als Substituenten vorzugsweise Halogen wie Chlor oder Brom oder insbesondere Hydroxy in Betracht kommen, oder eine (5-6C)Cycloalkylaminogruppe dar.

T als aromatischer Aminrest stellt bevorzugt einen Anilinrest oder einen im Phenylring durch 1 oder 2 Substituenten aus der Reihe Halogen (vorzugsweise Chlor), (1-4C)Alkyl, (1-4C)Alkoxy, Hydroxy und Phenoxy substituierten Anilinrest dar.

T als gesättigter heterocyclischer Aminrest stellt bevorzugt einen über das N-Atom gebundenen Morpholinrest dar.

T steht bevorzugt für Ta als Cl, OH, $NH_2$, Mono(1-4C)alkylamino, Monohydroxy(2-4C)alkylamino, Di(1-2C)alkylamino, Bis-[hydroxy(2-4C)alkyl]-amino, Anilino oder Morpholino ; weiter bevorzugt für Tb als Cl, OH, $NH_2$, Mono-(1-2C)alkylamino, Monohydroxy(2-4C)alkylamino oder Bis-[hydroxy(2-4C)alkyl]-amino.

Z steht bevorzugt für Za oder Zb, wobei
$Z_a$ für $-COXa$, $-COXj\ A^{\ominus}$ ; $-SO_2Xa$ ; $-CO(CH_2)_aN(C_{1\text{-}2}\text{-Alkyl})_2$ oder $-COCH_2\overset{\oplus}{N}(CH_3)_3\ A^{\ominus}$ und
Zb für

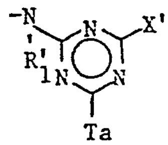 ; 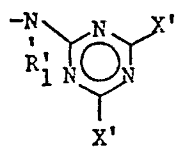 ;

$-NHCOCH_2N(C_{1-2}\text{-Alkyl})_2$, $-NHCOCH_2\overset{\oplus}{N}(CH_3)_3\ A^{\ominus}$ oder

$-NHCOCH_2-$ 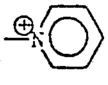 ,

worin X' Xa oder Xj $A^{\ominus}$ bedeutet,
stehen ;
weiter bevorzugt steht Z für Za' oder Zb', wobei
Za' für $-COXb$, $-COXj\ A^{\ominus}$ oder $-COCH_2\overset{\oplus}{N}(CH_3)_3\ A^{\ominus}$ und
Zb' für

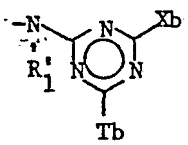 ; 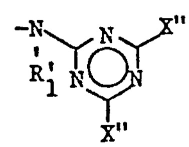 ;

$-NHCOCH_2N(C_{1-2}\text{-Alkyl})_2$, $-NHCOCH_2\overset{\oplus}{N}(CH_3)_3\ A^{\ominus}$ oder

$-NHCOCH_2-$ 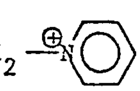 $A^{\ominus}$,

worin X″ Xb oder Xj $A^\ominus$ bedeutet, stehen ;
weiter bevorzugt bedeutet Z —COXd oder Zb″, wobei Zb″ für

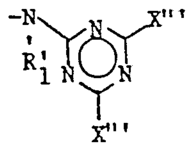 , $-NHCOCH_2\overset{\oplus}{N}(CH_3)_3\ A^-$ oder

$-NHCOCH_2$ 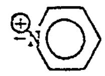 $A^\ominus$,

worin X‴ Xc oder Xj $A^\ominus$ bedeutet, steht ;
insbesondere bevorzugt bedeutet Z —COXe oder Zb‴, wobei Zb‴ für

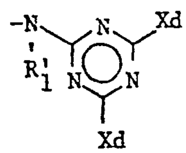

steht, worin Xd besonders bevorzugt Xe bedeutet.

Die Gruppen Za, Za′, —COXd oder —COXe befinden sich vorzugsweise in $D_I$. Liegen pro durch die Brücke Y verbundene Molekülhälfte einer Verbindung der Formel I zwei Gruppen Zb oder bevorzugte Formen davon vor, so befinden sich vorzugsweise eine Gruppe Zb in $D_I$ und die andere in $K_{II}$.

Das Brückenglied Y stellt bevorzugt einen zweibindigen Rest aus der Reihe —CO—, —CO—A—CO— [mit A als direkte Bindung, (1-4C)Alkylen, (2-4C)Alkenylen oder ($C_6$- oder $C_{10}$)-Arylen] und Triazinyl dar.

**Y steht weiter bevorzugt für Ya als zweibindiger Rest —CO—, —COCH = CHCO,**

$-CO(CH_2)_2$ oder $_3CO-$, 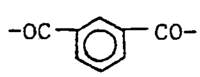 , 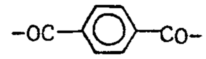 oder 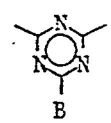 ,

worin B eine der Bedeutungen von T oder X hat ;
weiter bevorzugt steht Y für Yb als —CO—, —COCH = CHCO—, $—COCH_2CH_2CO—$,

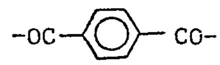 oder 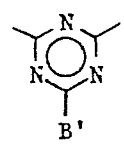 ,

worin
B′ eine der Bedeutungen von Ta hat oder für Xb oder Xj steht ;
weiter bevorzugt steht Y für Yc als —CO—, —COCH = CHCO—, $—COCH_2CH_2CO—$ oder

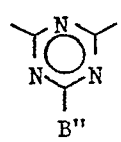 ,

worin B″ eine der Bedeutungen von Tb hat oder für Xd oder Xj steht ; insbesondere bevorzugt steht Y für —CO—.

In $D_I$ als Anilinrest kann der Phenylrest weitere Substituenten tragen, beispielsweise 1 oder 2 Substituenten aus der Reihe Halogen, (1-4C)Alkyl, (1-4C)Alkoxy, Mono-(1-4C)alkylamino, Di-(1-4C)alkylamino, Phenoxy, —NHCO(1-4C)Alkyl, —NHCOPhenyl, $—SO_2$(1-4C)Alkyl, $—SO_2$Phenyl, $—SO_2N(R_9)_2$ und $—CON(R_9)_2$, worin $R_9$ unabhängig voneinander Wasserstoff oder (1-4C)Alkyl bedeutet, sowie gegebenenfalls zusätzlich zu diesen Substituenten insbesondere 1 oder 2 basische oder kationische Gruppen Z.

$D_I$ als Naphthylaminrest trägt bevorzugt keine weiteren Substituenten oder eine oder zwei über eine $—SO_2—$Brücke gebundene basische oder kationische Gruppen X.

Trägt $D_I$ als Anilinrest eine Gruppe Z, so befindet sich diese bevorzugt

a) in 3-Stellung (bezogen auf die Azogruppe), wobei bevorzugt kein weiterer Substituent oder 1 weiterer Substituent vorzugsweise in 4-, 5- oder 6-Stellung oder 2 weitere Substituenten vorzugsweise in 2,5-Stellung vorhanden sind ;

b) in 4-Stellung (bezogen auf die Azogruppe), wobei bevorzugt kein weiterer Substituent oder lediglich 1 zusätzlicher Substituent (sowohl in 2- als auch 3-Stellung) zugegen ist.

Enthält $D_I$ als Anilinrest 2 Gruppen Z, so sind diese bevorzugt identisch und befinden sich bevorzugt in 2,5- oder 3,5-Stellung (bezogen auf die Azogruppe), wobei vorzugsweise kein oder 1 zusätzlicher Substituent zugegen ist.

Ist in $D_I$ eine Gruppe Z gebunden, so steht $D_I$ bevorzugt für Z—D', worin D' unsubstituiertes Phenyl ; durch ein oder zwei Substituenten aus der Reihe Halogen (vorzugsweise Chlor), (1-4C)Alkyl (vorzugsweise Methyl) oder (1-4C)Alkoxy (vorzugsweise Methoxy) substituiertes Phenyl ; oder 1- oder 2-Naphthyl, das als Gruppe Z die Gruppe $—SO_2Xa$ trägt, bedeutet ; insbesondere bevorzugt steht D' als unsubstituiertes Phenyl.

Enthält $D_I$ keine Gruppe Z gebunden, so steht $D_I$ bevorzugt als Da in der Bedeutung eines Restes (a) oder (b),

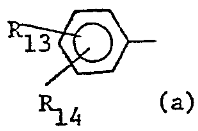
(a)

oder

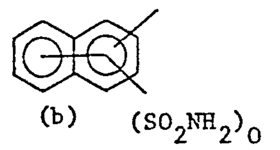
(b) oder 1

worin $R_{13}$ Wasserstoff, Halogen, (1-4C)Alkyl, (1-4C)Alkoxy, Phenoxy, —NHCO(1-4C)Alkyl, —NHCOPhenyl, $—SO_2$(1-4C)Alkyl, $—SO_2$Phenyl, $—SO_2N(R_9)_2$ oder $—CON(R_9)_2$ und $R_{14}$ Wasserstoff, Halogen, (1-4C)Alkyl oder (1-4C)Alkoxy, bedeuten.

$R_{13}$ steht bevorzugt für $R_{13}'$ als Wasserstoff, Chlor, Methyl, Methoxy, Acetylamino, Benzoylamino, $—SO_2NH_2$ oder $—CONH_2$ ; weiter bevorzugt für $R_{13}''$ als Wasserstoff, Chlor, Methyl, Methoxy oder Acetylamino ; insbesondere bevorzugt bedeutet $R_{13}$ Wasserstoff.

$R_{14}$ steht bevorzugt für $R_{14}'$ als Wasserstoff, Chlor, Methyl oder Methoxy ; insbesondere bevorzugt steht $R_{14}$ für Wasserstoff.

Da steht bevorzugt für Da' als Rest ($a_1$)

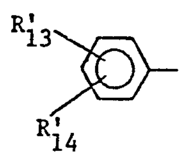
($a_1$) ;

insbesondere bevorzugt für Da'' als Rest ($a_2$)

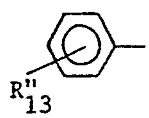
($a_2$).

Die Reste $K_I$ und $K_{II}$ bedeuten unabhängig voneinander bevorzugt einen Rest der Formel (c) oder (d),

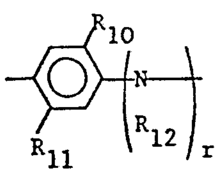
(c)

oder

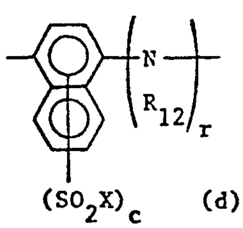
(d)

worin im Falle eines Restes $K_{II}$ r = 1 und im Falle eines Restes $K_I$ r = 0 ist ;

$R_{10}$ Wasserstoff, (1-4C)Alkyl oder (1-4C)Alkoxy ;

$R_{11}$ Wasserstoff, Halogen, (1-4C)Alkyl, (1-4C)Alkoxy, —NHCO(1-4C)Alkyl, $—NHCONH_2$ oder die Gruppe Zb ;

$R_{12}$ Wasserstoff oder (1-4C)Alkyl und

c 0, 1 oder 2

bedeuten.

$R_{10}$ bedeutet bevorzugt $R_{10}'$ als Wasserstoff, Methyl oder Methoxy.

$R_{11}$ steht bevorzugt für $R_{11}'$ als Wasserstoff, Chlor, Methyl, Methoxy, $—NHCOCH_3$, $—NHCONH_2$ oder Zb'' ; weiter bevorzugt für $R_{11}''$ als Wasserstoff, Methyl, Methoxy, $—NHCOCH_3$, $—NHCONH_2$ oder Zb'' oder für $R_{11}'''$ als Wasserstoff, Methyl, Methoxy, $—NHCOCH_3$ oder $—NHCONH_2$.

$R_{12}$ steht vorzugsweise für $R_{12}'$ als Wasserstoff oder Methyl ; insbesondere steht $R_{12}$ für Wasserstoff.

c bedeutet bevorzugt 0.

Bevorzugte Verbindungen entsprechen der Formel Ia,

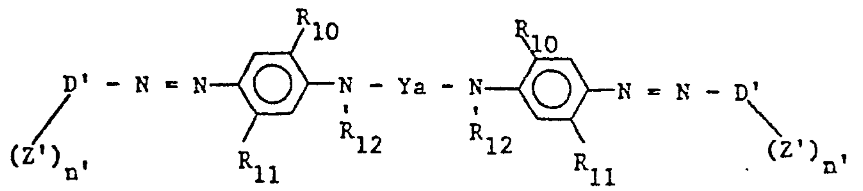

(Ia)

worin

Z' unabhängig voneinander die Gruppe Za oder Zb ;

n' unabhängig voneinander 1 oder 2

bedeuten und Ya, D', $R_{10}$, $R_{11}$ und $R_{12}$ wie oben definiert sind.

Davon bevorzugt sind symmetrische Verbindungen der Formel Ia',

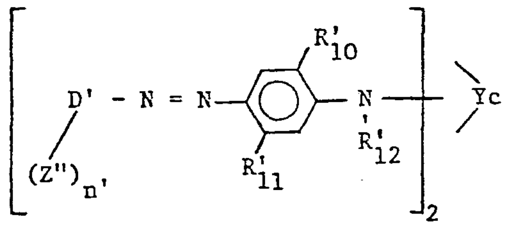

(Ia')

worin Z'' für die Gruppe Za' oder Zb' steht.

Insbesondere bevorzugt sind Verbindungen der Formel Ia', worin Z'' für Zb'', n' für 1, $R_{11}'$ für $R_{11}''$, $R_{12}'$ für Wasserstoff und Yc für —CO— stehen.

Bevorzugte Verbindungen entsprechen auch der Formel Ib,

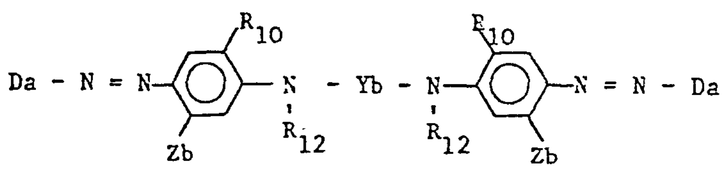

(Ib)

worin die Variablen die oben angeführten Bedeutungen besitzen.

Davon bevorzugt sind symmetrische Verbindungen der Formel Ib'

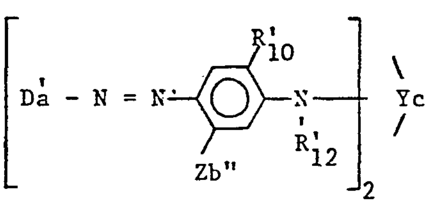

(Ib')

insbesondere bevorzugt sind Verbindungen der Formel Ib', worin Da' für Da'', $R_{12}'$ für Wasserstoff und Yc für —CO— stehen.

Bevorzugt sind auch Verbindungen der Formel Ic,

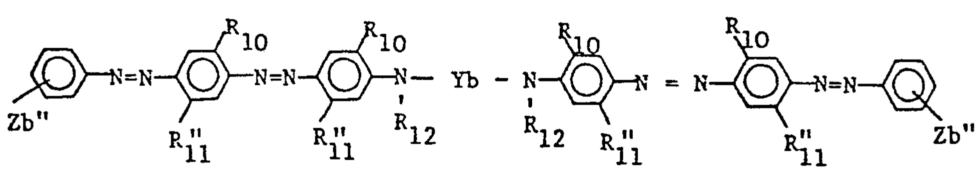

(Ic)

worin die Variablen die oben angeführten Bedeutungen besitzen.

Davon bevorzugt sind symmetrische Verbindungen der Formel Ic′

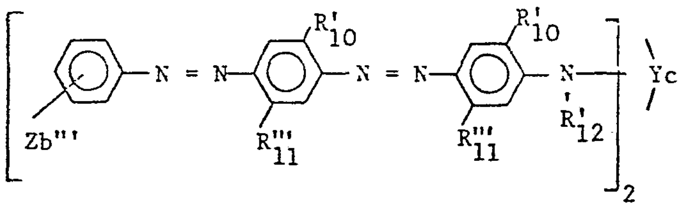

(Ic′)

insbesondere bevorzugt sind Verbindungen der Formel Ic′, worin $R_{12}'$ für Wasserstoff und Yc für —CO— stehen.

In allen vorstehenden Definitionen bedeutet Halogen generell Fluor, Chlor oder Brom.

Tritt in einer Formel ein Symbol mehr als einmal auf, so kann es, sofern nichts anderes festgelegt ist, die gleiche oder verschiedene Bedeutung besitzen.

Bevorzugt sind die Verbindungen der Formel I symmetrisch.

Die Verbindungen der Formel I werden erfindungsgemäss hergestellt, indem man eine Verbindung der Formel II,

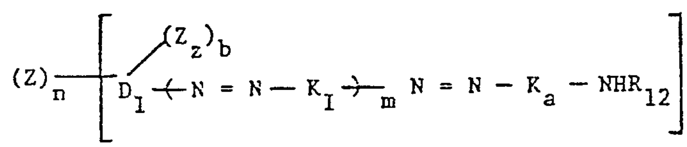

(II)

worin $K_a$—$NR_{12}$— den Rest $K_{II}$ wie oben definiert bedeutet, und eine weitere Verbindung der Formel II, die gleich oder verschieden sein kann, über die Aminogruppen mit einer die Brücke Y einführenden Verbindung kondensiert.

Diese Kondensation wird nach an sich bekannten Methoden durchgeführt. Als die Brücke Y einführende Verbindungen werden vorteilhaft Säuredihalogenide und insbesondere Säuredichloride wie Phosgen, das Dichlorid von Fumarsäure, Oxalsäure, Malonsäure, Bernsteinsäure oder höherer Homologe, Terephthalsäure oder Isophthalsäure oder auch Cyanurhalogenid und Derivate davon verwendet.

Die erhaltenen Verbindungen der Formel I werden auf an sich bekannte Weise aus dem Reaktionsgemisch isoliert.

Die basische Gruppen tragenden Verbindungen der Formel I können in wasserlösliche Salze übergeführt werden, indem man sie mit mindestens stöchiometrischen Mengen einer anorganischen Mineralsäure, beispielsweise Salzsäure, Schwefelsäure oder Phosphorsäure, oder vorzugsweise einer organischen Säure, beispielsweise Ameisensäure, Essigsäure, Milchsäure, Citronensäure, Glykolsäure oder Methansulfonsäure, behandelt.

In Verbindungen der Formel I kann gegebenenfalls der Anteil an freien basischen, d. h. nicht protonierten Gruppen X durch Einwirkung geeigneter Alkylierungsmittel, welche den Rest $R_7$ enthalten, auch in quaternäre Ammoniumionen tragende kationische Gruppen X übergeführt werden.

Die Ausgangsverbindungen der Formel II können analog zu an sich bekannten Methoden hergestellt werden, d. h. durch übliche Kupplungsreaktionen ausgehend von zugänglichen Diazokomponenten wie auch Kupplungskomponenten, wobei die enthaltenen basischen bzw. kationischen Gruppen Z entweder vor oder nach der Kupplung auf an sich bekannte Weise eingeführt werden.

Die Verbindungen der Formel I in Form ihrer wasserlöslichen Säureadditionssalze oder als quaternäre Ammoniumsalze stellen Farbstoffe dar ; sie dienen zum Färben oder Bedrucken von Fasern, Fäden oder daraus hergestellten Textilien, die aus Zellulosematerial, z. B. Baumwolle, bestehen oder diese enthalten, nach an sich bekannten Methoden ; Baumwolle wird dabei vorzugsweise nach dem Ausziehverfahren gefärbt, beispielsweise aus langer oder kurzer Flotte und bei Raum- bis Kochtemperatur.

Das Bedrucken erfolgt durch Imprägnieren mit einer Druckpaste, welche nach an sich bekannter Methode zusammengestellt wird.

Insbesondere eignen sich die Verbindungen der Formel I (in Form ihrer wasserlöslichen Säureadditionssalze oder als quaternäre Ammoniumsalze) jedoch zum Färben oder Bedrucken von Papier, z. B. für die Herstellung von in der Masse gefärbtem, geleimtem oder ungeleimtem Papier. Sie können aber auch zum Färben von Papier nach dem Tauchverfahren verwendet werden. Das Färben und Bedrucken von Papier erfolgt nach bekannten Methoden.

Die neuen Farbstoffe können weiter auch zum Färben oder Bedrucken von Leder, insbesondere von niederaffinen Lederarten, die vegetabil nachgegerbt wurden, nach an sich bekannten Methoden verwendet werden.

Die dabei erhaltenen Färbungen und Drucke (insbesondere die auf Papier) zeigen gute Gebrauchsechtheiten.

Die Verbindungen der Formel I können auch in Form von Färbepräparaten eingesetzt werden. Die Verarbeitung in stabile flüssige, vorzugsweise wässrige Färbepräparate kann auf allgemein bekannte Weise erfolgen, vorteilhaft durch Lösen in geeigneten Lösungsmitteln, gegebenenfalls unter Zugabe eines Hilfsmittels, z. B. eines Stabilisators; beispielsweise können solche Präparationen wie in der französischen Patentschrift Nr. 1.572.030 beschrieben hergestellt werden.

Eine günstige Zusammensetzung solcher flüssigen Präparate ist beispielsweise die folgende (Teile bedeuten Gewichtsteile):

100 Teile einer Verbindung der Formel I als Säureadditionssalz oder als quaternäres Ammoniumsalz,
1-100, vorzugsweise 1-10 Teile eines anorganischen Salzes,
1-100 Teile einer organischen Säure wie Ameisen-, Essig-, Milch-, Citronensäure,
100-800 Teile Wasser,
0-500 Teile eines Lösungsvermittlers (z. B. Glykole wie Diäthylenglykol, Triäthylenglykol, Hexylenglykol; Glykoläther wie Methylcellosolve, Methylcarbitol, Butylpolyglykol; Harnstoff; Formamid, Dimethylformamid).

Ebenso können die Verbindungen der Formel I auf an sich bekannte Weise zu festen, bevorzugt granulierten Färbepräparaten verarbeitet werden, vorteilhaft durch Granulieren wie in der französischen Patentschrift Nr. 1.581.900 beschrieben.

Eine günstige Zusammensetzung für feste Präparate ist beispielsweise die folgende (Teile bedeuten Gewichtsteile):

100 Teile einer Verbindung der Formel I als Säureadditionssalz oder als quaternäres Ammoniumsalz,
1-100, vorzugsweise 1-10 Teile eines anorganischen Salzes,
0-800 Teile eines Stellmittels (vorzugsweise nichtionogen wie Dextrin, Zucker, Traubenzucker oder Harnstoff).

In der festen Präparation kann noch bis zu 10 % an Restfeuchtigkeit vorhanden sein.

Die Farbstoffe der Formel I (als Säureadditionssalz oder quaternäres Ammoniumsalz) besitzen gute Löslichkeitseigenschaften, insbesondere zeichnen sie sich durch gute Kaltwasserlöslichkeit aus. Weiter färben sie die Abwässer bei der Herstellung von geleimtem wie auch ungeleimtem Papier praktisch gar nicht oder nur geringfügig an. Sie melieren auf Papier gefärbt nicht und sind weitgehend unempfindlich gegen Füllstoff und pH-Schwankungen. Die Färbungen auf Papier sind brillant und zeichnen sich durch bemerkenswerte Lichtechtheit aus; nach längerem Belichten ändert sich die Nuance Ton-in-Ton. Die gefärbten Papiere sind sehr gut nassecht nicht nur gegen Wasser, sondern auch gegen Milch, Fruchtsäfte und gesüsste Mineralwasser und besitzen zudem gute Alkoholechtheit.

Die Farbstoffe haben hohe Substantivität, d. h. sie ziehen praktisch quantitativ auf und zeigen dabei ein gutes Aufbauvermögen: sie können der Papiermasse direkt, d. h. ohne vorheriges Auflösen, als Trockenpulver oder Granulat zugesetzt werden, ohne dass eine Minderung in der Brillanz oder Verminderung in der Farbausbeute eintritt. Die geleimte Papierfärbung zeigt gegenüber der ungeleimten keinen Stärkeabfall. Mit den erfindungsgemässen Farbstoffen kann auch in Weichwasser mit voller Farbausbeute gefärbt werden.

Faserstoffe, die Holzschliff enthalten, werden mit den Farbstoffen der vorliegenden Erfindung in guter und egaler Qualität gefärbt.

Die gefärbten Papiere sind sowohl oxidativ als auch reduktiv bleichbar, was für die Wiederverwendung von Ausschuss- und Altpapier von Wichtigkeit ist.

Aus den US-Patentschriften 3,910,876 (1) und 3,987,022 (2) sind biskationische Disazoverbindungen bekannt; (1) offenbart Verbindungen ohne Brücke, die zwei verschiedene kationische Gruppen (a) und (b) enthalten; (2) offenbart überbrückte Verbindungen, deren kationische Gruppen mit der für (1) genannten Gruppe (b) übereinstimmen, wobei die Gruppe (b) immer über ein tertiäres basisches N-Atom direkt an das chromophore aromatische System gebunden ist. Gegenüber den Verbindungstypen aus (1) und (2) sind die in den erfindungsgemässen Verbindungen enthaltenen basischen/kationischen Gruppen Z bzw. $Z_z$ entweder nicht über ein N-Atom oder in allen den Fällen, in denen die Verknüpfung über ein N-Atom erfolgt, über ein nichtbasisches N-Atom an das chromophore System gebunden.

In den folgenden Beispielen bedeuten Teile Gewichts- bzw. Volumenteile und Prozente Gewichtsprozente; die Temperaturen sind in Celsiusgraden angegeben.

## Beispiel 1

44,2 Teile N-(3'-Dimethylaminopropyl)-4-aminobenzamid werden in 200 Teilen Wasser und 70 Teilen 30 %-iger Salzsäure gelöst und bei 0-5° mit 55 Teilen 4 N Natriumnitritlösung diazotiert. Nach einer Stunde wird der Ueberschuss an Nitrit mit Amidosulfonsäure zerstört. Anschliessend trägt man 28 Teile 2-Amino-1-methoxy-4-methylbenzol ein und stellt den pH mit Natriumacetat auf 4. Die Kupplung setzt sofort ein, es resultiert ein gelber Farbstoff. Nach einer Stunde wird Kochsalz bis zur Sättigung der Lösung eingestreut, wodurch der Farbstoff nach längerem Rühren kristallin ausfällt. Er wird abgesaugt, mit Sole nachgewaschen und getrocknet. Der Farbstoff entspricht der Formel

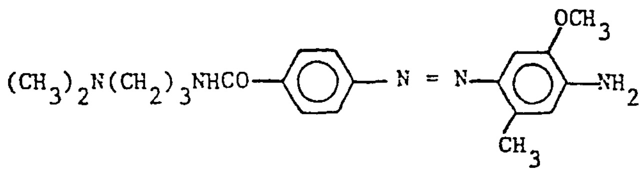

17,6 Teile des so hergestellten Farbstoffpulvers werden in 300 Teilen Wasser gelöst. Durch diese auf 40° erwärmte Lösung wird in schwachem Strom Phosgen geleitet, wobei der pH durch Zutropfen von 12%-iger Natronlauge bei 5,5-6 gehalten wird. Nach etwa einer Stunde ist im Dünnschichtchromatogramm kein Aminoazofarbstoff mehr nachweisbar. Die Phosgenisierung wird dann abgebrochen und der entstandene Disazofarbstoff mit Natronlauge ausgefällt, abgesaugt und getrocknet. Er entspricht der Formel

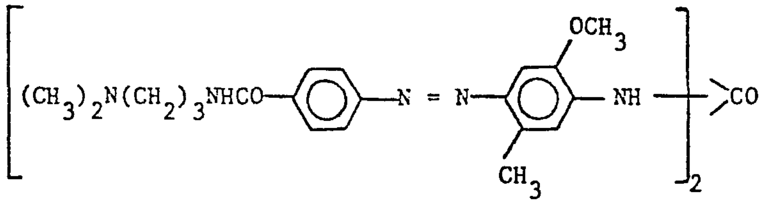

und wird als gelbes Pulver erhalten. Der Farbstoff in Salzform. z. B. als essigsaures Salz, färbt Papier in leuchtend goldgelben Tönen. Die Papierfärbungen besitzen ausgezeichnete Nass- und Alkoholechtheiten und hervorragende Lichtechtheit.

Anstelle des in Beispiel 1 verwendeten Phosgens können in analoger Weise auch andere Säuredihalogenide eingesetzt werden und insbesondere die Dichloride beispielsweise der Fumarsäure, Bernsteinsäure oder Terephthalsäure oder auch Cyanurhalogenid, worin ein Halogenatom durch einen organischen Rest, der z. B. abgeleitet ist von einem Amin oder Alkohol, ersetzt sein kann. Mit den so hergestellten Farbstoffen (als Säureadditionssalze), deren chromophorer Teil dem Farbstoff des Beispiels 1 entspricht, kann Papier in goldgelber Nuance gefärbt werden ; diese Färbungen zeigen gute Nass- und Alkoholechtheiten und sind gut lichtecht.

Ebenso bestehen bezüglich der in Beispiel 1 verwendeten Diazokomponente, welche die basische bzw. kationische Gruppe trägt, Variationsmöglichkeiten. Zum Beispiel können in an sich bekannter Weise ausgehend von dem Chlorid oder Dichlorid einer Nitro-benzol-carbonsäure oder auch -dicarbonsäure wie Isophthalsäure oder Terephthalsäure, Umsetzung mit einem geeigneten Diamin und anschliessende Reduktion der Nitrogruppe hergestellte Diazokomponenten eingesetzt werden, die nachstehend durch Symbole gekennzeichnet sind. Für D sind beispielsweise möglich :

$D_1$ 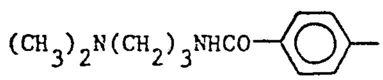

(gemäss Beispiel 1)

$D_2$ 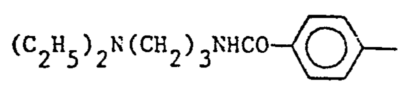

$D_3$ 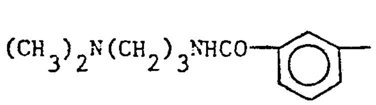

$D_4$ 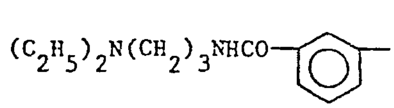

$D_5$ 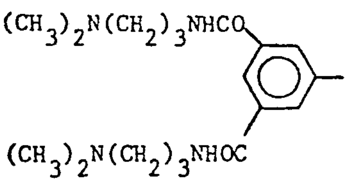

$D_6$ 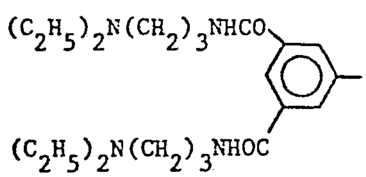

$D_7$ 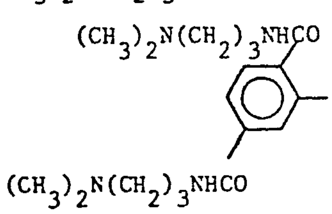

$D_8$ 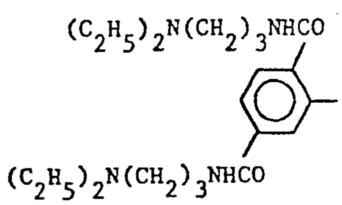

Für die Herstellung der Reste $D_1$ bis $D_8$ werden jeweils als Diamine 3-Dimethyl- bzw. 3-Diäthylaminopropylamin verwendet ; Beispiele für weiter mögliche Diamine sind die folgenden :

Diamine der Formel $H_2N(CH_2)_n\ NR_1R_2$, worin für

a) $n = 2$ ; $R_1 = R_2 = CH_3$
b) $n = 2$ ; $R_1 = R_2 = C_2H_5$
c) $n = 2$ ; $R_1 = CH_3$, $R_2 = C_2H_5$
d) $n = 2$ ; $R_1 = R_2 = CH(CH_3)_2$
e) $n = 2$ ; $R_1 = R_2 = CH_2CH_2CH(CH_3)_2$
f) $n = 2$ ; $R_1 = R_2 = (CH_2)_5CH_3$

g) $n = 2$ ; $—NR_1R_2 =$ 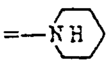

h) $n = 5$ ; $R_1 = R_2 = C_2H_5$
i) $n = 6$ ; $R_1 = R_2 = CH_3$
j) $n = 3$ ; $R_1 = R_2 = CH_2CH_2OH$

sowie die Diamine

k) $H_2N(CH_2)_2\overset{\oplus}{N}(CH_3)_3Cl^{\ominus}$ und
l) $CH_3NH(CH_2)_4\ N(C_2H_5)_2$.

Weitere Reste D sind :

$D_9$ 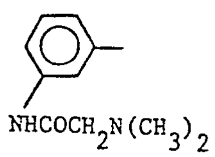

$D_{10}$ 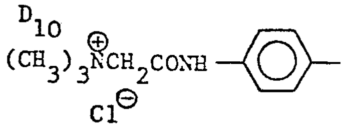

$D_{11}$ 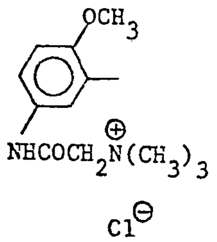

$D_{12}$ 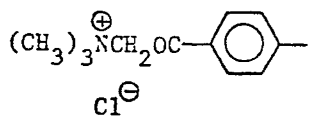

Analog der in Beispiel 1 beschriebenen Methode können weitere Disazofarbstoffe hergestellt werden, welche der Formel

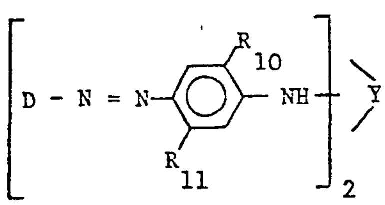

entsprechen. In der folgenden Tabelle 1 sind die Variablen angeführt ; in der letzten Spalte I dieser Tabelle ist der auf Papier erzielte Farbton angegeben, es bedeutet dabei a = grüngelb ; b = gelb ; c = goldgelb ; d = rotstichig gelb und e=orange. Nass- und Alkoholechtheiten dieser Papierfärbungen sowie auch die Lichtechtheit sind gut.

(Siehe Tabelle 1 Seite 12f.)

Tabelle 1

| Bsp. Nr. | D | $R_{10}$ | $R_{11}$ | -Y- | I |
|---|---|---|---|---|---|
| 2 | $D_1$ | H | H | -CO- | a |
| 3 | $D_1$ | H | $CH_3$ | do. | b |
| 4 | $D_1$ | $CH_3$ | $CH_3$ | do. | b |
| 5 | $D_1$ | $OCH_3$ | $OCH_3$ | do. | e |
| 6 | $D_1$ | H | $NHCOCH_3$ | do. | b |
| 7 | $D_1$ | H | $NHCONH_2$ | do. | b |
| 8 | $D_1$ | $OCH_3$ | H | do. | d |
| 9 | $D_1$ | H | Cl | do. | d |
| 10 | $D_2$ | $OCH_3$ | $CH_3$ | do. | c |
| 11 | $D_2$ | H | H | do. | a |
| 12 | $D_2$ | H | H | $-COCH=CHCO-$ | a |
| 13 | $D_2$ | $OCH_3$ | $CH_3$ | do. | c |
| 14 | $D_3$ | H | H | -CO- | a |
| 15 | $D_3$ | $OCH_3$ | $CH_3$ | do. | c |
| 16 | $D_3$ | do. | H | do. | d |
| 17 | $D_3$ | do. | $OCH_3$ | do. | e |
| 18 | $D_3$ | H | $NHCOCH_3$ | do. | b |
| 19 | $D_3$ | H | H | $-COCH=CHCO-$ | a |
| 20 | $D_3$ | $OCH_3$ | $CH_3$ | do. | c |
| 21 | $D_3$ | do. | do. | 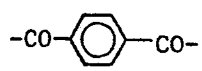 | c |
| 22 | $D_4$ | do. | do. | do. | c |
| 23 | $D_4$ | do. | do. | $-COCH_2CH_2CO-$ | c |
| 24 | $D_4$ | do. | do. | -CO- | c |
| 25 | $D_4$ | H | H | do. | a |
| 26 | $D_4$ | $OCH_3$ | H | do. | d |
| 27 | $D_5$ | do. | H | do. | d |
| 28 | $D_5$ | H | H | do. | a |
| 29 | $D_5$ | H | $NHCOCH_3$ | -CO- | b |
| 30 | $D_6$ | H | do. | do. | b |
| 31 | $D_6$ | $OCH_3$ | $CH_3$ | do. | c |
| 32 | $D_6$ | $CH_3$ | do. | do. | b |
| 33 | $D_6$ | H | do. | $-COCH=CHCO-$ | b |
| 34 | $D_7$ | H | do. | do. | b |
| 35 | $D_7$ | H | H | 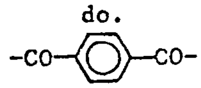 | a |
| 36 | $D_7$ | $OCH_3$ | $CH_3$ | do. | c |
| 37 | $D_7$ | do. | do. | -CO- | c |
| 38 | $D_7$ | H | $NHCONH_2$ | do. | b |

Tabelle 1 (Fortsetzung)

| Bsp. Nr. | D | $R_{10}$ | $R_{11}$ | – Y – | I |
|---|---|---|---|---|---|
| 39 | $D_7$ | H | $NHCOCH_3$ | do. | b |
| 40 | $D_7$ | H | Cl | do. | d |
| 41 | $D_7$ | H | H | do. | a |
| 42 | $D_7$ | H | $CH_3$ | do. | b |
| 43 | $D_7$ | $CH_3$ | do. | do. | b |
| 44 | $D_8$ | $OCH_3$ | $OCH_3$ | do. | e |
| 45 | $D_8$ | do. | H | do. | d |
| 46 | $D_8$ | do. | $CH_3$ | do. | c |
| 47 | $D_8$ | do. | do. | $-COCH_2CH_2CO-$ | c |
| 48 | $D_8$ | H | H | do. | a |
| 49 | $D_3$ | H | $CH_3$ | -CO- | b |
| 50 | $D_3$ | $CH_3$ | do. | do. | b |
| 51 | $D_3$ | H | $NHCONH_2$ | do. | b |
| 52 | $D_3$ | H | Cl | do. | d |
| 53 | $D_5$ | $OCH_3$ | $CH_3$ | do. | c |
| 54 | $D_5$ | H | H | -COCH=CHCO- | a |
| 55 | $D_9$ | H | H | do. | a |
| 56 | $D_9$ | H | H | -CO- | a |
| 57 | $D_9$ | $OCH_3$ | $CH_3$ | do. | c |
| 58 | $D_{10}$ | H | $NHCOCH_3$ | -CO- | b |
| 59 | $D_{10}$ | $OCH_3$ | H | do. | d |
| 60 | $D_{10}$ | do. | $CH_3$ | do. | c |
| 61 | $D_{10}$ | $CH_3$ | do. | do. | b |
| 62 | $D_{11}$ | do. | do. | do. | b |
| 63 | $D_{11}$ | H | H | -CO- 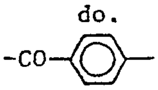 CO- | a |
| 64 | $D_{12}$ | H | $CH_3$ | do. | b |
| 65 | $D_{12}$ | $OCH_3$ | H | -CO- | d |
| 66 | $D_{10}$ | H | H | do. | a |
| 67 | $D_{11}$ | H | Cl | do. | d |
| 68 | $D_{11}$ | H | H | do. | a |

Beispiel 69

Durch Diazotierung von 25 Teilen N-(3'-Diäthylaminopropyl)-4-aminobenzamid und Kupplung auf 12 Teile 1-Amino-2,5-dimethylbenzol gemäss den Angaben in Beispiel 1 wird die Monoazoaminoverbindung der Formel

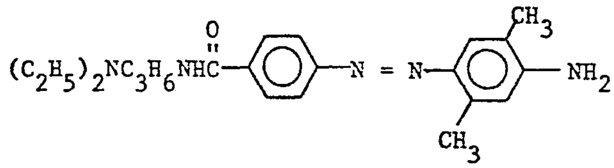

in Lösung erhalten. Zu der filtrierten Lösung werden 7,6 Teile Cyanurchlorid gegeben. Der pH wird durch Zutropfen von 4 N Sodalösung bei 5 gehalten. Sobald die sichtbare Reaktion abgeklungen ist, wird die Temperatur auf 60° erhöht und weitere 3 Stunden bei pH 5 gerührt. Nach dieser Zeit ist die Kondensation beendet, im Dünnschichtchromatogramm ist kein Aminoazofarbstoff mehr nachweisbar. Der durch Kondensation erhaltene Disazofarbstoff ist zum grössten Teil ausgefallen, er wird abfiltriert und getrocknet. Man erhält den Farbstoff der Formel

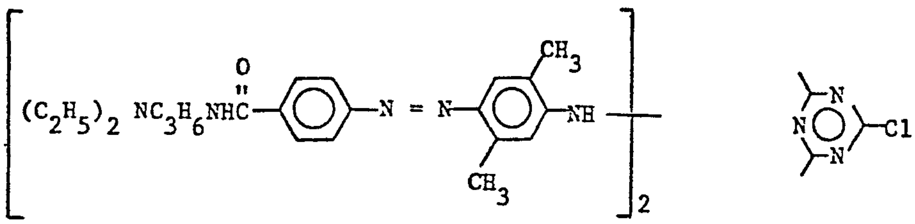

als gelbes Pulver, er färbt als Säureadditionssalz Papier in schönen neutralgelben Tönen. Die Färbungen besitzen ausgezeichnete Nass- und Alkoholechtheiten und hervorragende Lichtechtheit.

Weitere Farbstoffe entsprechend der Formel

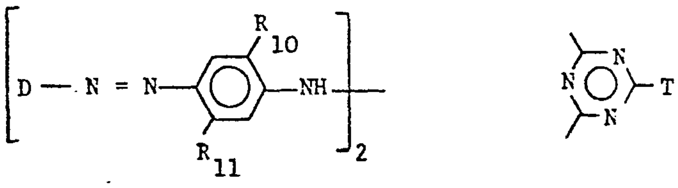

die analog den Angaben in Beispiel 69 hergestellt werden können oder für welche durch längeres Kochen in wässriger Aminlösung das Chloratom der Triazinylbrücke gegen den entsprechenden Aminrest ausgetauscht ist, sind in der folgenden Tabelle 2 zusammengestellt. Die mit diesen Farbstoffen erhaltenen Papierfärbungen, deren Nuance unter der Spalte I angegeben ist (Bedeutung der Buchstaben siehe Einführung zu Tabelle 1), zeigen gute Licht-, Nass- und Alkoholechtheiten.

Tabelle 2

| Bsp.Nr. | D | $R_{10}$ | $R_{11}$ | T | I |
|---|---|---|---|---|---|
| 70 | $D_1$ | $CH_3$ | $CH_3$ | Cl | b |
| 71 | $D_1$ | do. | do. | $NH_2$ | b |
| 72 | $D_2$ | do. | do. | do. | b |
| 73 | $D_2$ | H | H | $NHC_2H_4OH$ | a |
| 74 | $D_2$ | $OCH_3$ | $CH_3$ | do. | c |
| 75 | $D_{10}$ | $OCH_3$ | $CH_3$ | $N(CH_3)_2$ | c |
| 76 | $D_1$ | $CH_3$ | do. | $N(C_2H_4OH)_2$ | b |
| 77 | $D_2$ | do. | do. | do. | b |
| 78 | $D_9$ | do. | do. | do. | b |

Tabelle 2 (Fortsetzung)

| Bsp.Nr. | D | $R_{10}$ | $R_{11}$ | T | I |
|---|---|---|---|---|---|
| 79 | $D_4$ | $OCH_3$ | H | do. | d |
| 80 | $D_6$ | do. | $OCH_3$ | Cl | e |
| 81 | $D_1$ | do. | $CH_3$ | Cl | c |
| 82 | $D_2$ | do. | do. | Cl | c |

Beispiel 83

Analog den Angaben in Beispiel 1 werden 83 Teile 4-[2',4'-Bis(3"-N,N-diäthylaminopropylamino)-s-triazin-6'-yl-amino]-anilin diazotiert und auf 25,8 Teile 2-Amino-1-methoxy-4-methylbenzol gekuppelt. Die resultierende dunkelrote Farbstofflösung wird mit Natronlauge auf pH 6 gestellt und auf 40-45° erwärmt. In diese Lösung leitet man Phosgen ein und hält während der Reaktion durch Zutropfen von verdünnter Natronlauge den pH bei 6-7. Nach etwa 2 Stunden ist die Phosgenisierung beendet. Anschliessend wird der pH auf 10-11 gestellt, worauf der Farbstoff ausfällt. Er wird abgesaugt und im Vakuum bei 60° getrocknet. Der als Pulver erhaltene Farbstoff entspricht der Formel

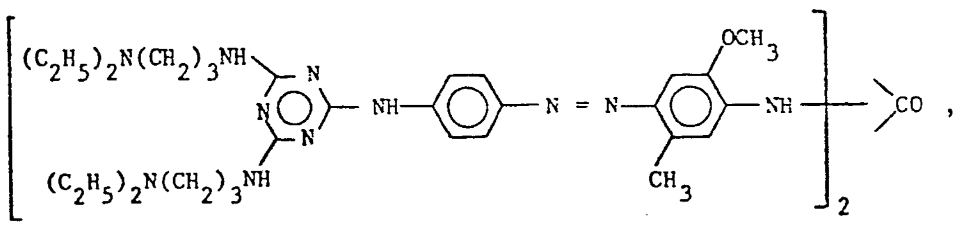

er färbt Papier in Form eines Säureadditionssalzes, z. B. der Essigsäure, in brillanten rotstichig gelben Tönen. Die Papierfärbungen zeigen sehr gute Licht- und Nassechtheiten.

Wird in Beispiel 83 anstelle von Phosgen ein anderes Säuredihalogenid verwendet, beispielsweise die bereits für Beispiel 1 erwähnten Dichloride der Fumarsäure, Bernsteinsäure oder Terephthalsäure sowie Cyanurhalogenid oder ein Derivat davon, so werden Disazofarbstoffe erhalten, die in Form der Säureadditionssalze Papier in rotstichig gelben Tönen färben ; diese Färbungen haben gute Licht- und Nassechtheiten.

Die anilinische Diazokomponente des Beispiels 83 leitet sich von 4-Nitroanilin ab (Umsetzung mit Cyanurchlorid und Diamin, anschliessend Reduktion) ; weiter mögliche anilinische Diazokomponenten leiten sich beispielsweise auch von den folgenden Nitroverbindungen AB : 3-Nitroanilin ; 2-Chlor- oder 2-Brom-4-nitroanilin, 2-Methyl-4-nitroanilin, 2-Methoxy-4-nitroanilin ; 2-Methyl-3-nitroanilin ; 4-Chlor-3-nitroanilin, 4-Methyl-3-nitroanilin, 4-Methoxy-3-nitroanilin ; 2-Methyl-5-nitroanilin, 2-Methoxy-5-nitroanilin oder 5-Chlor-2-methoxy-3-nitroanilin.

In der folgenden Tabelle 3 sind weitere Disazofarbstoffe aufgeführt, die analog der in Beispiel 83 beschriebenen Methode hergestellt werden können und welche der Formel

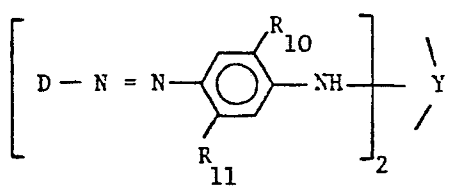

entsprechen, wobei die Reste $D_{13}$ bis $D_{18}$ die folgende Bedeutung haben :

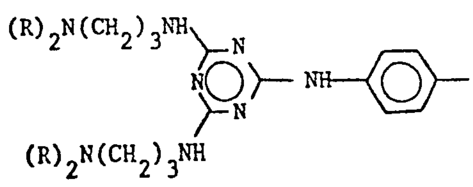

$D_{13}$ mit $R = CH_3$
$D_{14}$ mit $R = C_2H_5$
(gemäss Beispiel 83)

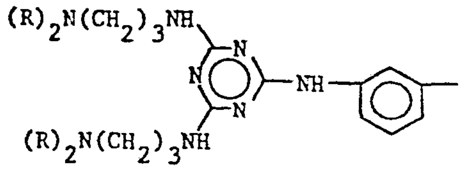

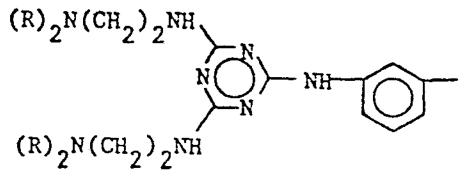

$D_{15}$ mit $R = CH_3$
$D_{16}$ mit $R = C_2H_5$
$D_{17}$ mit $R = CH_3$
$D_{18}$ mit $R = C_2H_5$

Auf Papier gefärbt ergeben diese Farbstoffe den unter Kolonne I angeführten Farbton (wobei den Buchstaben dieselbe Bedeutung wie für Tabelle 1 zukommt), die Papierfärbungen zeigen gute Licht- und Nassechtheiten.

Tabelle 3

| Bsp. Nr. | D | $R_{10}$ | $R_{11}$ | — Y — | I |
|---|---|---|---|---|---|
| 84 | $D_{13}$ | H | H | -CO- | a |
| 85 | $D_{13}$ | $OCH_3$ | $CH_3$ | do. | c |
| 86 | $D_{13}$ | H | do. | do. | b |
| 87 | $D_{13}$ | $OCH_3$ | $OCH_3$ | -COCH=CHCO- | e |
| 88 | $D_{13}$ | do. | H | do. | d |
| 89 | $D_{13}$ | H | $NHCOCH_3$ | -CO- | b |
| 90 | $D_{13}$ | H | H | $-COCH_2CH_2CO-$ | a |
| 91 | $D_{14}$ | H | $CH_3$ | -CO- | b |
| 92 | $D_{14}$ | H | H | do. | a |
| 93 | $D_{14}$ | $OCH_3$ | $OCH_3$ | do. | e |
| 94 | $D_{14}$ | $CH_3$ | $CH_3$ | do. | b |
| 95 | $D_{14}$ | H | $NHCOCH_3$ | do. | b |
| 96 | $D_{14}$ | H | $NHCONH_2$ | do. | b |
| 97 | $D_{14}$ | $OCH_3$ | H | do. | d |
| 98 | $D_{14}$ | H | Cl | do. | d |
| 99 | $D_{14}$ | $OCH_3$ | H | -COCH=CHCO- | d |
| 100 | $D_{14}$ | do. | H | 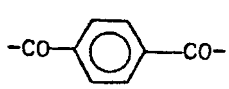 | d |
| 101 | $D_{15}$ | do. | H | do. | d |
| 102 | $D_{15}$ | $OCH_3$ | H | -CO- | d |
| 103 | $D_{15}$ | do. | $CH_3$ | do. | c |
| 104 | $D_{15}$ | H | do. | do. | b |
| 105 | $D_{15}$ | H | do. | $-COCH_2CH_2CO-$ | b |
| 106 | $D_{16}$ | H | do. | do. | b |

Tabelle 3 (Fortsetzung)

| Bsp. Nr. | D | $R_{10}$ | $R_{11}$ | —Y— | I |
|---|---|---|---|---|---|
| 107 | $D_{16}$ | H | do. | -CO- | b |
| 108 | $D_{16}$ | $OCH_3$ | $CH_3$ | do. | c |
| 109 | $D_{16}$ | do. | H | do. | d |
| 110 | $D_{16}$ | H | $NHCOCH_3$ | do. | b |
| 111 | $D_{16}$ | H | H | do. | a |
| 112 | $D_{16}$ | H | H | $-COCH_2CH_2CO-$ | a |
| 113 | $D_{17}$ | H | H | -CO- | a |
| 114 | $D_{17}$ | $OCH_3$ | $CH_3$ | do. | d |
| 115 | $D_{17}$ | do. | H | do. | c |
| 116 | $D_{18}$ | H | H | do. | a |
| 117 | $D_{18}$ | $OCH_3$ | $CH_3$ | do. | c |
| 118 | $D_{13}$ | do. | do. | 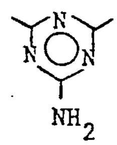 | c |
| 119 | $D_{14}$ | do. | do. | do. | c |
| 120 | $D_{14}$ | H | H | 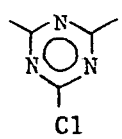 | a |
| 121 | $D_{14}$ | $OCH_3$ | H | do. | d |
| 122 | $D_{16}$ | $OCH_3$ | H | 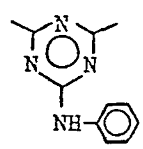 | d |
| 123 | $D_{16}$ | H | $NHCOCH_3$ | 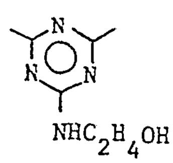 | b |
| 124 | $D_{17}$ | H | H | 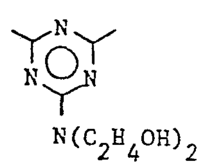 | a |

Beispiel 125

9,3 Teile Anilin werden in 100 Teilen Wasser verrührt, mit 30 Teilen 30 %-iger Salzsäure versetzt und bei 0-5° mit 25 Teilen 4 N Natriumnitritlösung diazotiert. In einer Vorlage werden 44,3 Teile 3-[2',4'-Bis(3''-N,N-diäthylaminopropylamino)-s-triazin-6'-yl-amino]-anilin in 500 Teilen Wasser verrührt und mit Salzsäure bis zu pH 3-4 versetzt. Anschliessend lässt man obige Diazolösung zutropfen und hält den pH durch Zugabe von Natriumacetat bei 4. Nach kurzer Zeit ist die Kupplungsreaktion beendet. Der erhaltene

Aminozofarbstoff wird dann wie in Beispiel 1 beschrieben mit Phosgen zum Disazofarbstoff verknüpft. Der Farbstoff entspricht der Formel

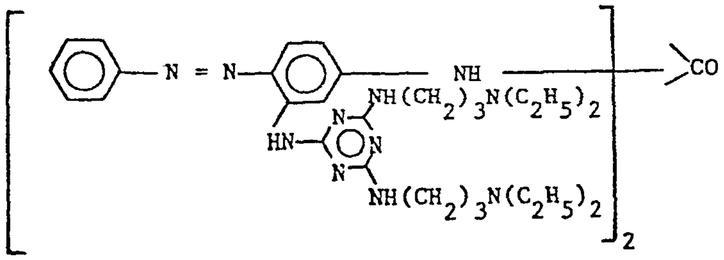

und färbt als Säureadditionssalz Papier in neutralgelben Tönen. Diese Färbungen sind sehr gut licht- und nassecht.

Analog Beispiel 125 können weitere Disazofarbstoffe hergestellt werden, die der Formel

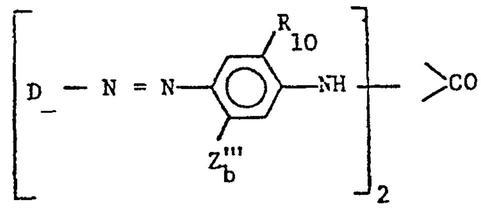

entsprechen und die in Tabelle 4 zusammengestellt sind. Für $—Z_b'''$ stehen dabei die folgenden Reste :

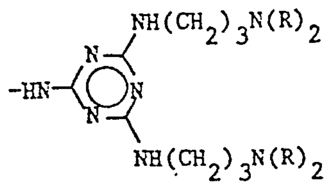

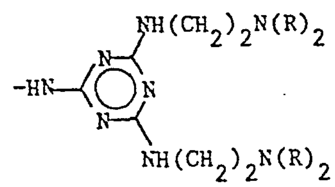

$Z_b^1$ mit R = $CH_3$
$Z_b^2$ mit R = $C_2H_5$
$Z_b^3$ mit R = $CH_3$
$Z_b^4$ mit R = $C_2H_5$
$Z_b^5$

$$-HN-COCH_2\overset{\oplus}{N}(CH_3)_3Cl^{\ominus}$$

Diese Farbstoffe färben Papier in dem unter Kolonne I angegebenen Farbton ; die Färbungen zeigen gute Licht- und Nassechtheiten.

Tabelle 4

| Bsp. Nr. | Diazokomponente $D-NH_2$ | $-Z_b'''$ | $R_{10}$ | I |
|---|---|---|---|---|
| 126 | Anilin | $Z_b^1$ | H | neutralgelb |
| 127 | do. | $Z_b^1$ | $OCH_3$ | orange |
| 128 | do. | $Z_b^2$ | do. | do. |
| 129 | do. | $Z_b^5$ | H | neutralgelb |

Tabelle 4 (Fortsetzung)

| Bsp. Nr. | Diazokomponente $D-NH_2$ | $-Z_b'''$ | $R_{10}$ | I |
|---|---|---|---|---|
| 130 | do. | $Z_b^3$ | H | do. |
| 131 | 2,5-Dimethoxy-anilin | $Z_b^1$ | H | orange |
| 132 | 4-Methylanilin | $Z_b^2$ | H | rotstichig gelb |
| 133 | do. | $Z_b^5$ | H | do. |
| 134 | do. | $Z_b^1$ | $CH_3$ | orange |
| 135 | 1-Amino-4-acetyl-aminobenzol | $Z_b^1$ | H | rotstichig gelb |
| 136 | do. | $Z_b^2$ | H | do. |
| 137 | do. | $Z_b^5$ | H | do. |
| 138 | 3-Chlor-4-methyl-anilin | $Z_b^1$ | H | do. |
| 139 | do. | $Z_b^2$ | H | do. |
| 140 | do. | $Z_b^2$ | $OCH_3$ | orange |
| 141 | 1-Aminonaphthalin | $Z_b^2$ | H | braun-orange |
| 142 | do. | $Z_b^1$ | H | do. |
| 143 | 2-Aminonaphthalin-5-sulfonsäureamid | $Z_b^2$ | $CH_3$ | do. |
| 144 | 2-Aminonaphthalin-6-sulfonsäureamid | $Z_b^1$ | H | do. |

## Beispiel 145

8,3 Teile 4-[2',4'-Bis(3''-N,N-diäthylaminopropylamino)-s-triazin-6'-yl-amino]-anilin werden wie in Beispiel 83 diazotiert und auf 2-Amino-1-methoxy-4-methylbenzol gekuppelt. Die erhaltene Lösung des Aminoazofarbstoffes wird mit 25 Teilen 30 %-iger Salzsäure versetzt, sodann werden zur Diazotierung bei 10-15° 11 Teile 4 N Natriumnitritlösung zugegeben. Nach einer Stunde wird überschüssiges Nitrit mit Amidosulfonsäure zerstört. In die saure Diazolösung werden anschliessend 2,1 Teile 3-Aminotoluol getropft, wobei der pH mit Natronlauge bei 3-4 gehalten wird. Die Kupplung ist nach kurzer Zeit beendet. Es wird dann mit Natronlauge auf pH 8-9 gestellt und ausgesalzen. Der gebildete Aminodisazofarbstoff fällt vollständig aus, wird abgesaugt und mit Sole gewaschen. Der feuchte Presskuchen wird in 400 Teilen Wasser verrührt und mit Salzsäure auf pH 6 gestellt. In die auf 40° erwärmte Lösung leitet man während 5 Stunden Phosgen ein; nach Beendigung der Phosgenisierung stellt man den pH auf 10, saugt den ausgefallenen Farbstoff ab, wäscht mit Sole nach und trocknet. Der Tetrakisazofarbstoff entsprechend der Formel

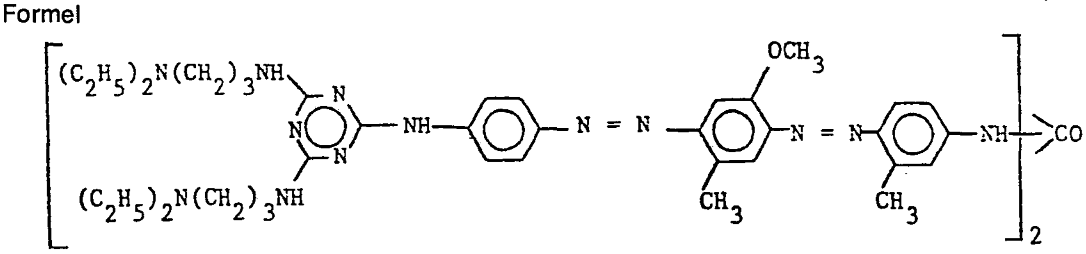

wird als dunkles Pulver erhalten. Er färbt Papier in Form eines Säureadditionssalzes in braunen Tönen ; die Färbungen zeigen perfekte Nassechtheiten.

Beispiel 146

38 Teile der in Beispiel 69 hergestellten Monoazoaminoverbindung werden in 300 Teilen Wasser und 30 Teilen Eisessig gelöst. In die auf 0° abgekühlte Lösung werden 18,4 Teile Cyanurchlorid eingetragen. Unter gutem Rühren wird der pH mit 10 %-iger Natronlauge auf 6 gestellt und so lange unter diesen Bedingungen gerührt, bis im Dünnschichtchromatogramm praktisch keine Monoazoaminoverbindung mehr nachweisbar ist. Es werden 60 Teile der Verbindung der Formel

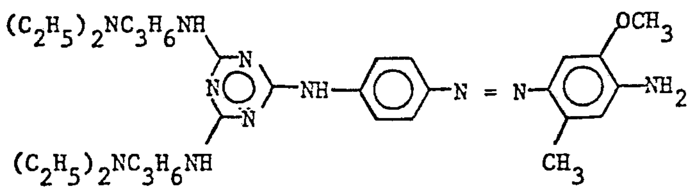

zugegeben, anschliessend wird die Temperatur auf 60° erhöht. Der pH wird durch Zutropfen von 10 %-iger Natronlauge weiter bei 6-7 gehalten. Nach 2 Stunden ist die Kondensation beendet. Durch Zugabe von Natronlauge wird der pH auf 9-10 gestellt, worauf der Farbstoff in gut filtrierbarer Form ausfällt. Er wird abgesaugt und getrocknet. Man erhält den Farbstoff der Formel

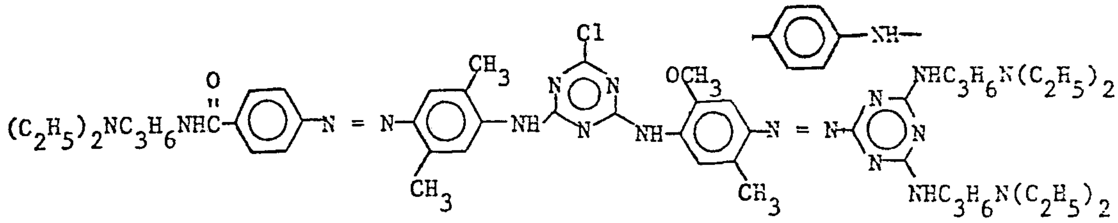

als gelbes Pulver ; der Farbstoff färbt als Säureadditionssalz Papier in schwach rotstichig gelben Tönen. Die Färbungen besitzen ausgezeichnete Licht- und Nassechtheiten.

Beispiele 147-149

Im Farbstoff des Beispiels 146 kann das Chloratom der Triazinylbrücke durch Kochen in einem Ueberschuss einer wässrigen Aminlösung beispielsweise gegen die Reste $NH_2$, $NHC_2H_4OH$ oder $N(C_2H_4OH)_2$ ausgetauscht werden. Mit diesen Farbstoffen werden schwach rotstichig gelbe Papierfärbungen erhalten, die gute Licht- und Nassechtheiten zeigen.

Beispiel 150

22 Teile 4-[2',4'-Bis(3''-N,N-diäthylaminopropylamino)-s-triazin-6'-yl-amino]-anilin werden in 50 Teilen Wasser und 20 Teilen 30 %-iger Salzsäure gelöst und auf 0° abgekühlt. Hierauf tropft man 13 Teile einer 4 N Natriumnitritlösung zu. Nach 1 Stunde wird der Ueberschuss an Nitrit zerstört, anschliessend trägt man 7 Teile fein gepulvertes 1-Aminonaphthalin ein. Nach 30 Minuten wird der pH der entstandenen blauen Lösung mit 13 Teilen Natriumacetat auf 3,5-4 gestellt. Nach 3-4 Stunden ist die Kupplung beendet. Man erwärmt die Farbstofflösung auf 60° und leitet so lange Phosgen durch die Lösung, bis im Dünnschichtchromatogramm keine Monoazoaminoverbindung mehr nachweisbar ist. Der pH wird dabei durch stetes Zutropfen von 10 %-iger Natronlauge bei 5-7 gehalten. Nach der Phosgenisierung wird der pH auf 10 gestellt, worauf der Farbstoff vollständig ausfällt. Danach lässt man während einer Stunde Luft durch die Apparatur blasen und filtriert den ausgefallenen Farbstoff ab. Man erhält den Farbstoff der Formel

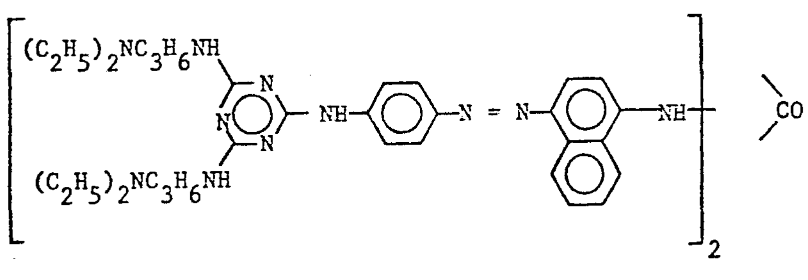

als feuchten Presskuchen, der getrocknet wird. Als Säureadditionssalz färbt der Farbstoff Papier in rotstichig gelben Tönen, die Färbungen zeigen perfekte Nassechtheiten und hervorragende Lichtechtheit.

Beispiel 151

48 Teile Verbindung der Formel

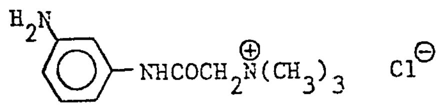

werden in 500 Teilen Wasser gelöst und mit 50 Teilen 30 %-iger Salzsäure versetzt. Es wird auf 0° abgekühlt, dann werden 25 Teile 4 N Natriumnitritlösung zugetropft. Der pH wird durch Zugabe von 10 %-iger Natronlauge vorsichtig auf 4-5 gestellt, worauf die Kupplung einsetzt ; nach etwa 2 Stunden ist die Reaktion beendet. Man erhöht die Temperatur der orangen Farbstofflösung auf 50° und lässt so lange Phosgen durch die Lösung perlen, bis im Dünnschichtchromatogramm keine Monoazoaminoverbindung mehr nachweisbar ist. Der pH wird dabei durch Zutropfen von Natronlauge bei 5-6 gehalten. Nach der Phosgenierung leitet man durch die Farbstoffsuspension während einer Stunde Luft und versetzt anschliessend mit 10 Vol.-% Kochsalz. Der ausgefallene Farbstoff wird abfiltriert. Man erhält den Farbstoff der Formel

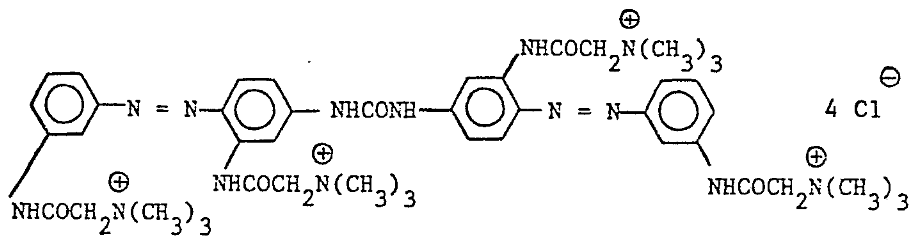

als feuchten Presskuchen, der getrocknet wird. Der Farbstoff färbt Papier in rotstichig gelben Tönen. Licht- und Nassechtheiten der Färbungen sind perfekt, das Abwasser ist farblos.

Beispiel 152

10 Teile des gemäss Beispiel 83 hergestellten Farbstoffpulvers werden in 300 Teilen Wasser verrührt und mit 2,4 Teilen Eisessig versetzt. Der Farbstoff geht dabei vollständig in Lösung. Anschliessend wird die Farbstofflösung zur Trockne eingedampft. Man erhält das Farbstoffsalz entsprechend der Formel

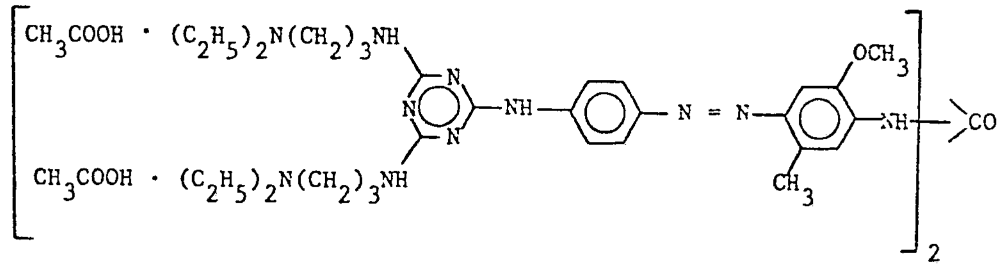

in Pulverform, das eine hohe Kaltwasserlöslichkeit besitzt.

Anstelle des in Beispiel 152 verwendeten Eisessigs können zur Salzbildung auch Salzsäure, Schwefelsäure, Phosphorsäure, Ameisensäure, Milchsäure und andere anorganische oder insbesondere organische Säuren eingesetzt werden.

Auf analoge Weise können die Farbstoffe der übrigen Beispiele, sofern diese basische Gruppen enthalten, in die Salzform übergeführt werden.

Beispiel 153

60 Teile des Farbstoffsalzes aus Beispiel 152 werden bei Raumtemperatur in eine Lösung aus 20 Teilen Dextrin, 20 Teilen Eisessig und 400 Teilen Wasser eingetragen und zu einer homogenen Suspension verrührt. Durch Zerstäubungstrocknung erhält man rötlich gelbe Granulate, die sich in Wasser sehr gut lösen und Papier in rotstichig gelben Tönen färben.

Analog können die Farbstoffsalze der übrigen Beispiele zu Granulaten verarbeitet werden.

Beispiel 154

20 Teile des gemäss Beispiel 83 hergestellten Farbstoffpulvers werden in eine Lösung von 75 Teilen Wasser und 13 Teilen Eisessig eingetragen und unter Erwärmen auf 60° gelöst. Die Lösung wird unter Zusatz eines Filterhilfsmittels z. B. Kieselgur oder Hyflo klärfiltriert. Das Filtrat lässt man auf Raumtemperatur abkühlen und stellt es mit Wasser auf 120 Teile ein. Man erhält eine Farbstofflösung, die über mehrere Monate lagerungsstabil ist und die weder in der Kälte noch in der Wärme Farbstoffabscheidungen zeigt. Die Lösung kann direkt oder nach Verdünnen mit Wasser zum Färben von Papier eingesetzt werden.

Analog können die Farbstoffe der übrigen Beispiele zu stabilen flüssigwässrigen Farbstoffzubereitungen verarbeitet werden.

Anwendungsbeispiele

Färbevorschrift A

In einem Holländer werden 70 Teile chemisch gebleichter Sulfitcellulose aus Nadelholz und 30 Teile chemisch gebleichter Sulfitcellulose aus Birkenholz in 2 000 Teilen Wasser gemahlen. Zu dieser Masse streut man 0,5 Teile des Farbstoffs aus Beispiel 83 (als Säureadditionssalz, z. B. gemäss Beispiel 152). Nach 20 Minuten Mischzeit wird daraus Papier hergestellt. Das auf diese Weise erhaltene saugfähige Papier ist rotstichig gelb gefärbt. Das Abwasser ist praktisch farblos.

Färbevorschrift B

0,5 Teile des Farbstoffs aus Beispiel 83 (als Säureadditionssalz, z. B. gemäss Beispiel 152) werden in 100 Teilen heissem Wasser gelöst und auf Raumtemperatur abgekühlt. Die Lösung gibt man zu 100 Teilen chemisch gebleichter Sulfitcellulose, die mit 2 000 Teilen Wasser in einem Holländer gemahlen wurde. Nach 15 Minuten Durchmischung erfolgt die Leimung. Papier, das aus diesem Material hergestellt wird, zeigt eine rotstichig gelbe Nuance und besitzt gute Licht- und Nassechtheiten.

Färbevorschrift C

Eine saugfähige Papierbahn aus ungeleimtem Papier wird bei 40-50° durch eine Farbstofflösung folgender Zusammensetzung gezogen :

0,5 Teile des Farbstoffs aus Beispiel 83 (als Säureadditionssalz, z. B. gemäss Beispiel 152)
0,5 Teile Stärke und
99,0 Teile Wasser.

Die überschüssige Farbstofflösung wird durch zwei Walzen abgepresst. Die getrocknete Papierbahn ist rotstichig gelb gefärbt.

Analog den Färbevorschriften A bis C kann auch mit den Farbstoffen der übrigen Beispiele in Form ihrer Salze oder mit den festen oder flüssigwässrigen Präparationen gemäss den Beispielen 153 und 154 gefärbt werden.

Färbevorschrift D

100 Teile frisch gegerbtes und neutralisiertes Chromnarbenleder werden in einer Flotte aus 250 Teilen Wasser von 55° und 0,5 Teilen des nach Beispiel 145 hergestellten Farbstoffes (als Säureadditionssalz) während 30 Minuten im Fass gewalkt und im gleichen Bad mit 2 Teilen eines anionischen Fettlickers auf sulfonierter Transbasis während weiterer 30 Minuten behandelt ; die Leder werden in der üblichen Art getrocknet und zugerichtet. Man erhält egal gefärbtes Leder in gelbbrauner Nuance.

Weitere niederaffine, vegetabil nachgegerbte Leder können ebenfalls nach bekannten Methoden gefärbt werden.

Färbevorschrift E

2 Teile des Farbstoffes aus Beispiel 83 (als Säureadditions salz, z. B. gemäss Beispiel 152) werden in 4 000 Teilen enthärtetem Wasser bei 40° gelöst. Man bringt 100 Teile vorgenetztes Baumwollgewebe in das Bad ein und erhitzt in 30 Minuten auf Siedetemperatur. Das Bad wird während einer Stunde bei Siedetemperatur gehalten, wobei zon Zeit zu Zeit das verdampfte Wasser ersetzt wird. Hierauf nimmt man die Färbung aus der Flotte heraus, spült mit Wasser und trocknet. Der Farbstoff zieht praktisch quantitativ auf die Faser auf ; das Färbebad ist annähernd farblos. Man erhält eine rotstichig gelbe Färbung von guter Lichtechtheit und guten Nassechtheiten.

**Ansprüche** (für die Vertragsstaaten : BE, CH, DE, FR, IT, LI, NL, SE)

1. Basische und/oder kationische Gruppen enthaltende, sulfonsäuregruppenfreie Dis-, Tris- oder Tetrakisazoverbindungen, die der Formel I

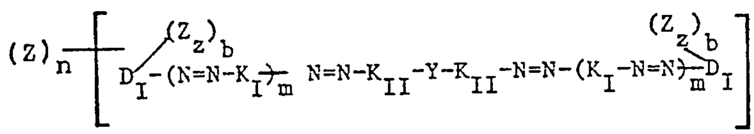

(I)

entsprechen, worin

$D_I$ als Rest einer Diazokomponente unabhängig voneinander einen unsubstituierten oder substituierten Anilin- oder Naphthylaminrest,

$K_I$ als Rest einer Kupplungs-/Diazokomponente unabhängig voneinander einen unsubstituierten oder substituierten Anilin- oder Naphthylaminrest und

$K_{II}$ als Rest einer Kupplungskomponente unabhängig voneinander einen unsubstituierten oder substituierten Anilin- oder Naphthylaminrest bedeuten ;

m unabhängig voneinander 0 oder 1 ist ;

Y für ein Brückenglied steht, das an die gegebenenfalls substituierte Aminogruppe eines jeden Restes $K_{II}$ gebunden ist und zwar in anderer Form als über zwei endständige Alkylengruppen :

n mindestens 1 ist und

b für 0, 1 oder 2 steht ;

Z unabhängig voneinander eine der folgenden Bedeutungen hat

i) als $-CO-X$, $-SO_2-X$; 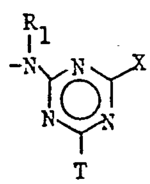 oder 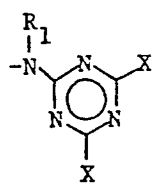 ;

ii) als kationische Gruppe

$-CO(CH_2)_a\overset{\oplus}{N}(R_8)_3A^{\ominus}$; $-NHCO(CH_2)_a\overset{\oplus}{N}(R_8)_3A^{\ominus}$,

$-NHCOCH_2$ 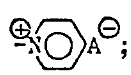 $A^{\ominus}$; $-NHNHCOCH_2\overset{\oplus}{N}(R_8)_3A^{\ominus}$ oder

$-NHNHCOCH_2$ 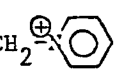 $A^{\ominus}$;

iii) als basische Gruppe

$-CO(CH_2)_aN(R_8)_2$, $-NHCO(CH_2)_aN(R_8)_2$ oder $-NHNHCOCH_2N(R_8)_2$,

worin

$R_1$ für Wasserstoff oder (1-4C)Alkyl,

T für Halogen, Hydroxy, $NH_2$, einen aliphatischen oder aromatischen Aminrest oder einen gesättigten heterocyclischen Aminrest, in welchem das N-Atom in den Heterocyclus einbezogen ist, stehen,

X unabhängig voneinander eine basische Gruppe $-NR_2-Q-NR_3R_4$ oder eine kationische Gruppe $-NR_2-Q-\overset{\oplus}{N}R_5R_6R_7A^{\ominus}$,

Q lineares oder verzweigtes (2-6C)Alkylen oder $-NHCOCH_2-$,

$R_2$ Wasserstoff oder (1-4C)Alkyl,

$R_3$ und $R_4$ unabhängig voneinander Wasserstoff, unsubstituiertes (1-6C)Alkyl, durch Hydroxy oder Cyano substituiertes (2-6C)Alkyl, Phenyl-(1-3C)-alkyl, dessen Phenylrest durch 1 bis 3 Substituenten aus der Reihe Chlor, (1-4C)Alkyl und (1-4C)Alkoxy substituiert sein kann, unsubstituiertes oder durch 1 bis 3 (1-4C)Alkylgruppen substituiertes (5-6C)Cycloalkyl bedeuten oder

$R_3$ und $R_4$ zusammen mit dem an sie gebundenen N-Atom einen 5- oder 6-gliedrigen, gegebenenfalls ein weiteres Heteroatom einschliessenden, gesättigten oder ungesättigten Ring bilden,

$R_5$ und $R_6$ unabhängig voneinander eine der Bedeutungen von $R_3$ und $R_4$ ausgenommen Wasserstoff haben und

$R_7$ (1-4C)Alkyl oder Benzyl bedeutet oder

$R_5$, $R_6$ und $R_7$ zusammen mit dem an sie gebundenen N-Atom ein Pyridiniumkation bilden, das gegebenenfalls durch 1 oder 2 Methylgruppen substituiert ist ;
a für 1, 2 oder 3,
$R_8$ für (1-4C)Alkyl und
$A^{\ominus}$ für ein nichtchromophores Anion stehen und
$Z_z$ unabhängig voneinander die Gruppe

$-(CH_2)_a\overset{\oplus}{N}(R_8)_3\ A^{\ominus}$, 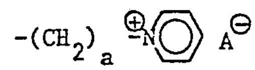 oder $-\overset{\oplus}{N}(R_8)_3\ A^{\ominus}$

bedeutet, worin a, $R_8$ und $A^{\ominus}$ wie oben definiert sind,
Säureadditionssalze der Verbindungen der Formel I und Gemische davon.

2. Verbindungen gemäss Anspruch 1, worin Z eine Gruppe Za oder Zb bedeutet,
$Z_a$ für $-COXa$, $-COXj\ A^{\ominus}$ ; $-SO_2Xa$ ; $-CO(CH_2)_aN(C_{1-2}\text{-Alkyl})_2$ oder $-COCH_2\overset{\oplus}{N}(CH_3)_3A^{\ominus}$ und
**Zb** für

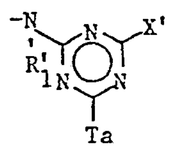 ; 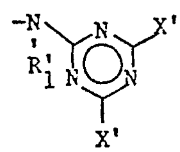 ;

$-NHCOCH_2N(C_{1-2}\text{-Alkyl})_2$, $-NHCOCH_2\overset{\oplus}{N}(CH_3)_3\ A^{\ominus}$ oder

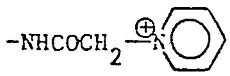 ,

worin X' Xa oder Xj $A^{\ominus}$ bedeutet,
Xa für

$-NR_2'-Q-NR_3'R_4'$ und Xj $-NH-(CH_2)_{2-3}-\overset{\oplus}{N}(CH_3)_3$ oder $-NH-(CH_2)_{2-3}-$ 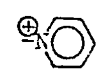 ,

$R_2'$ für Wasserstoff oder Methyl stehen,
Q wie in Anspruch 1 definiert ist,
$R_3'$ und $R_4'$ unabhängig voneinander Wasserstoff, lineares oder verzweigtes (1-6C)Alkyl, unverzweigtes Hydroxy(2-3C)alkyl oder Benzyl bedeuten oder
$R_3'$ und $R_4'$ zusammen mit dem N-Atom, an das sie gebunden sind, einen Pyrrolidin-, Piperidin- oder Morpholinring bilden ;
$A^{\ominus}$ für ein nichtchromophores Anion,
$R_1'$ für Wasserstoff oder Methyl,
Ta für Cl, OH, $NH_2$, Mono(1-4C)alkylamino, Monohydroxy(2-4C)alkylamino, Di(1-2C)alkylamino, Bis-[hydroxy(2-4C)alkyl]-amino, Anilino oder Morpholino und a für 1, 2 oder 3 stehen.

3. Verbindungen gemäss Anspruch 1, worin Y für Ya als zweibindiger Rest

$-CO-$, $-COCH{=}CHCO-$, $-CO(CH_2)_{2\ \text{oder}\ 3}CO-$, 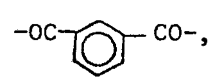, 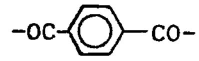 oder

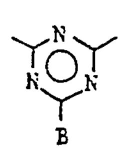

steht und B eine der Bedeutungen von T oder X wie in Anspruch 1 definiert hat.

4. Verbindungen gemäss Anspruch 1, worin $D_I$ unabhängig voneinander einen Anilinrest, dessen Phenylrest unsubstituiert ist oder durch 1 oder 2 Substituenten aus der Reihe Halogen, (1-4C)Alkyl, (1-4C)Alkoxy, Mono-(1-4C)alkylamino, Di-(1-4C)alkylamino, Phenoxy, $-NHCO(1\text{-}4C)Alkyl$, $-NHCOPhenyl$, $-SO_2(1\text{-}4C)Alkyl$, $-SO_2Phenyl$, $-SO_2N(R_9)_2$ und $-CON(R_9)_2$, worin $R_9$ unabhängig voneinander Wasserstoff oder (1-4C)Alkyl bedeutet, substituiert ist und zusätzlich 1 oder 2 Gruppen Z definiert in Anspruch 1 tragen kann, oder einen Naphthylaminrest darstellt, dessen Naphthylrest unsubstituiert ist oder der 1 oder 2 Gruppen Z in der Bedeutung $-SO_2X$ trägt, worin X wie in Anspruch 1 definiert ist.

5. Verbindungen gemäss Anspruch 1, worin die Reste $K_I$ und $K_{II}$ unabhängig voneinander einen Rest der Formel (c) oder (d),

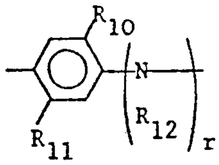

(c)

oder

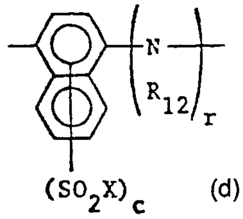

(d)

bedeuten,
worin im Falle eines Restes $K_{II}$ $r = 1$ und im Falle eines Restes $K_I$ $r = 0$ ist ;

$R_{10}$ Wasserstoff, (1-4C)Alkyl oder (1-4C)Alkoxy ;

$R_{11}$ Wasserstoff, Halogen, (1-4C)Alkyl, (1-4C)Alkoxy, —NHCO(1-4C)Alkyl, —$NHCONH_2$ oder die Gruppe Zb ;

$R_{12}$ Wasserstoff oder (1-4C)Alkyl und

c 0, 1 oder 2 bedeuten und

Zb wie in Anspruch 2 definiert ist.

6. Verbindungen gemäss Anspruch 1, die der Formel Ia

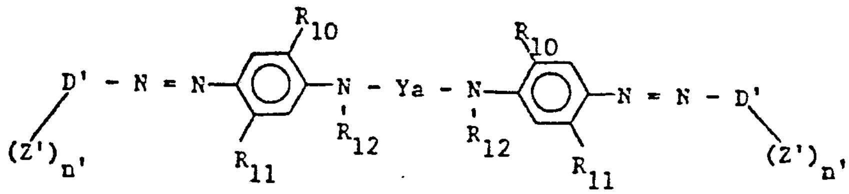

(Ia)

entsprechen, worin

Z' unabhängig voneinander die Gruppe Za oder Zb,

n' unabhängig voneinander 1 oder 2 bedeuten ;

Ya wie in Anspruch 3 definiert ist,

$R_{10}$, $R_{11}$ und $R_{12}$ wie in Anspruch 5 definiert sind,

Za und Zb wie in Anspruch 2 definiert sind ; und

D' unsubstituiertes Phenyl, durch 1 oder 2 Substituenten aus der Reihe Halogen, (1-4C)Alkyl oder (1-4C)Alkoxy substituiertes Phenyl ; oder 1- oder 2-Naphthyl, das als Z' die Gruppe —$SO_2Xa$ trägt, wobei Xa wie in Anspruch 2 definiert ist, bedeutet.

7. Verbindungen gemäss Anspruch 1, die der Formel Ib

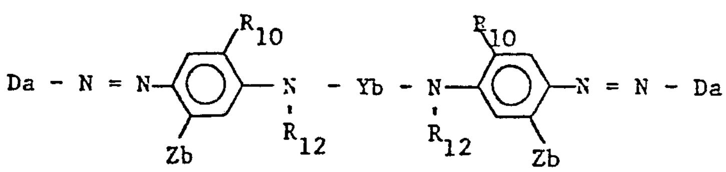

(Ib)

entsprechen, worin

$R_{10}$ und $R_{12}$ wie in Anspruch 5 definiert sind,

Zb wie in Anspruch 2 definiert ist,

Yb

-CO-, -COCH=CHCO-, $-COCH_2CH_2CO-$, 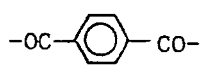 oder 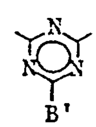

bedeutet, worin B' eine der Bedeutungen von Ta hat oder für Xb oder Xj $A^{\ominus}$ steht, worin

Ta, Xj und $A^{\ominus}$ wie in Anspruch 2 definiert sind,

Xb für $—NR_2'—Q'—NR_3''R_4''$,

$R_2'$ für Wasserstoff oder Methyl,

Q' für lineares oder verzweigtes (2-6C)Alkylen,

$R_3''$ und $R_4''$ unabhängig voneinander für Wasserstoff, lineares oder verzweigtes (1-4C)Alkyl oder 2-Hydroxyäthyl stehen oder zusammen mit dem N-Atom, an das sie gebunden sind, einen Piperidin- oder Morpholinring bilden, und

Da einen Rest der Formel (a) oder (b)

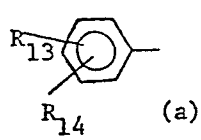 (a) oder 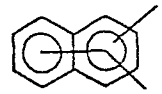 (b) $(SO_2NH_2)_0$ oder 1

bedeutet, worin

$R_{13}$ für Wasserstoff, Halogen, (1-4C)Alkyl, (1-4C)Alkoxy, Phenoxy, —NHCO(1-4C)Alkyl, —NHCOPhenyl, —$SO_2$(1-4C)Alkyl, —$SO_2$Phenyl, —$SO_2N(R_9)_2$ oder —$CON(R_9)_2$ mit $R_9$ als Wasserstoff oder (1-4C)Alkyl und

$R_{14}$ für Wasserstoff, Halogen, (1-4C)Alkyl oder (1-4C)Alkoxy stehen.

8. Verbindungen gemäss Anspruch 1, die der Formel Ic

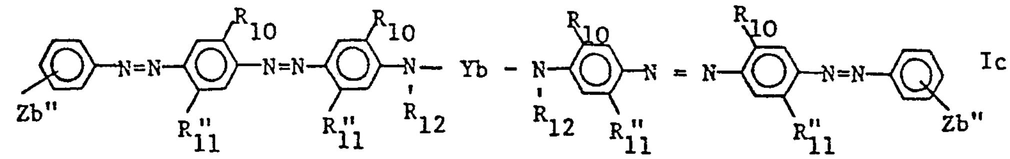 Ic

entsprechen, worin

Zb″ unabhängig

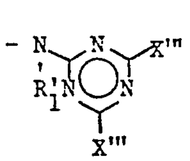 , 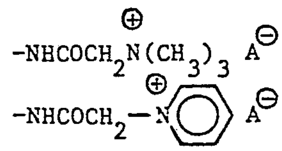 oder

voneinander für

X‴ für Xc oder Xj $A^{\ominus}$,

Xc für —$NR_2'$—$(CH_2)_{2\text{-}6}$—$NR_3''R_4''$ stehen,

$R_1'$, $R_2'$, Xj und $A^{\ominus}$ wie in Anspruch 2 definiert sind,

$R_3''$, $R_4''$ und Yb wie in Anspruch 7 definiert sind,

$R_{11}''$ für Wasserstoff, Methyl, Methoxy, —$NHCOCH_3$, —$NHCONH_2$ oder Zb″ steht und

$R_{10}$ und $R_{12}$ wie in Anspruch 5 definiert sind.

9. Verfahren zur Herstellung von Verbindungen der Formel I definiert in Anspruch 1, dadurch gekennzeichnet, dass man eine Verbindung der Formel II,

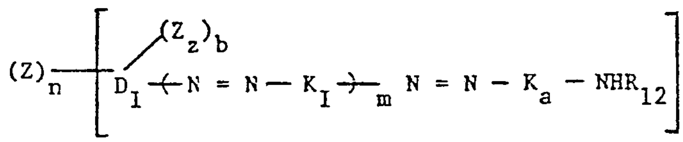 (II)

worin Z, $Z_z$, $D_I$, $K_I$, m, n und b wie in Anspruch 1 definiert sind,

$R_{12}$ Wasserstoff oder (1-4C)Alkyl und der Rest $K_a$—$NR_{12}$— den in Anspruch 1 definierten Rest $K_{II}$ bedeuten, und eine weitere Verbindung der Formel II, die gleich oder verschieden sein kann, über die Aminogruppen mit einer die Brücke Y einführenden Verbindung kondensiert.

10. Lagerstabile, flüssige Farbstoffpräparation enthaltend eine Verbindung gemäss einem der Ansprüche 1 bis 8 in Form eines wasserlöslichen Säureadditionssalzes oder als quaternäres Ammoniumsalz.

11. Wasserlösliche, feste, granulierte Farbstoffpräparation enthaltend eine Verbindung gemäss einem der Ansprüche 1 bis 8 in Form eines wasserlöslichen Säureadditionssalzes oder als quaternäres Ammoniumsalz.

12. Verfahren zum Färben oder Bedrucken von Substraten, die aus Papier, Baumwolle oder Leder bestehen oder diese enthalten, dadurch gekennzeichnet, dass man mit einer Verbindung gemäss einem der Ansprüche 1 bis 8 in Form eines wasserlöslichen Säureadditionssalzes oder als quaternäres Ammoniumsalz färbt oder bedruckt.

**Ansprüche** (für den Vertragsstaat AT)

1. Verfahren zur Herstellung von basische und/oder kationische Gruppen enthaltenden, sulfonsäuregruppenfreien Dis-, Tris- oder Tetrakisazcverbindungen, die der Formel I

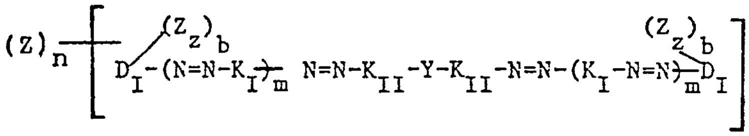

(I)

entsprechen, worin

$D_I$ als Rest einer Diazokomponente unabhängig voneinander einen unsubstituierten oder substituierten Anilin- oder Naphthylaminrest,

$K_I$ als Rest einer Kupplungs-/Diazokomponente unabhängig voneinander einen unsubstituierten oder substituierten Anilin- oder Naphthylaminrest und

$K_{II}$ als Rest einer Kupplungskomponente unabhängig voneinander einen unsubstituierten oder substituierten Anilin- oder Naphthylaminrest bedeuten ;

m unabhängig voneinander 0 oder 1 ist ;

Y für ein Brückenglied steht, das an die gegebenenfalls substituierte Aminogruppe eines jeden Restes $K_{II}$ gebunden ist und zwar in anderer Form als über zwei endständige Alkylengruppen ;

n mindestens 1 ist und

b für 0, 1 oder 2 steht ;

Z unabhängig voneinander eine der folgenden Bedeutungen hat

i) als

$-CO-X$, $-SO_2-X$; 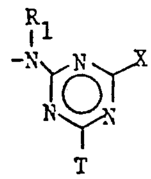 oder 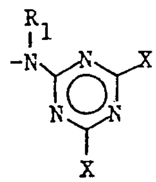 ;

ii) als kationische Gruppe

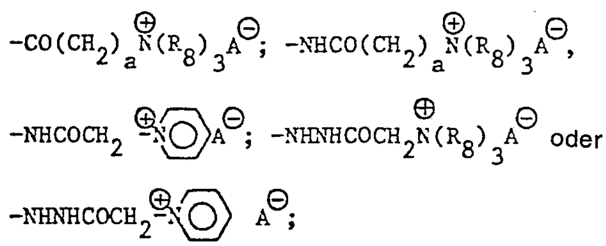

oder

iii) als basische Gruppe

$-CO(CH_2)_aN(R_8)_2$, $-NHCO(CH_2)_aN(R_8)_2$ oder $-NHNHCOCH_2N(R_8)_2$,

worin.

$R_1$ für Wasserstoff oder (1-4C)Alkyl,

T für Halogen, Hydroxy, $NH_2$, einen aliphatischen oder aromatischen Aminrest oder einen gesättigten heterocyclischen Aminrest, in welchem das N-Atom in den Heterocyclus einbezogen ist, stehen,

X unabhängig voneinander eine basische Gruppe $-NR_2-Q-NR_3R_4$ oder eine kationische Gruppe $-NR_2-Q-\overset{\oplus}{N}R_5R_6R_7\ A^{\ominus}$,

Q lineares oder verzweigtes (2-6C)Alkylen oder $-NHCOCH_2-$,

$R_2$ Wasserstoff oder (1-4C)Alkyl,

$R_3$ und $R_4$ unabhängig voneinander Wasserstoff, unsubstituiertes (1-6C)Alkyl, durch Hydroxy oder Cyano substituiertes (2-6C)Alkyl, Phenyl-(1-3C)-alkyl, dessen Phenylrest durch 1 bis 3 Substituenten aus der Reihe Chlor, (1-4C)Alkyl und (1-4C)Alkoxy substituiert sein kann, unsubstituiertes oder durch 1 bis 3 (1-4C)Alkylgruppen substituiertes (5-6C)-Cycloalkyl bedeuten oder

$R_3$ und $R_4$ zusammen mit dem an sie gebundenen N-Atom einen 5- oder 6-gliedrigen, gegebenenfalls ein weiteres Heteroatom einschliessenden gesättigten oder ungesättigten Ring bilden,

$R_5$ und $R_6$ unabhängig voneinander eine der Bedeutungen von $R_3$ und $R_4$ ausgenommen Wasserstoff haben und

$R_7$ (1-4C)Alkyl oder Benzyl bedeutet oder

$R_5$, $R_6$ und $R_7$ zusammen mit dem an sie gebundenen N-Atom ein Pyridiniumkation bilden, das gegebenenfalls durch 1 oder 2 Methylgruppen substituiert ist ;

a für 1, 2 oder 3,

$R_8$ für (1-4C)Alkyl und

$A^{\ominus}$ für ein nichtchromophores Anion stehen und

$Z_z$ unabhängig voneinander die Gruppe

$-(CH_2)_a\overset{\oplus}{N}(R_8)_3\,A^{\ominus}$, $-(CH_2)_a$ 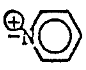 $A^{\ominus}$ oder $-\overset{\oplus}{N}(R_8)_3\,A^{\ominus}$

bedeutet, worin a, $R_8$ und $A^{\ominus}$ wie oben definiert sind, sowie von Säureadditionssalzen der Verbindungen der Formel I und Gemischen davon, dadurch gekennzeichnet, dass man eine Verbindung der Formel II

$$(Z)_n \left[ \overset{(Z_z)_b}{D_I} \leftarrow N=N-K_I \rightarrow_m N=N-K_a-NHR_{12} \right] \qquad \text{(II)}$$

worin

Z, $Z_z$, $D_I$, $K_I$, m, n und b wie oben definiert sind,

$R_{12}$ Wasserstoff oder (1-4C)Alkyl und der Rest $K_a—NR_{12}—$ den oben definierten Rest $K_{II}$ bedeuten, und eine weitere Verbindung der Formel II, die gleich oder verschieden sein kann, über die Aminogruppen mit einer die Brücke Y einführenden Verbindung kondensiert.

2. Verfahren nach Anspruch 1, dadurch gekennzeichnet, dass man als die Brücke Y einführende Verbindungen Säuredihalogenide wie Phosgen, das Dichlorid der Fumarsäure, Oxalsäure, Malonsäure, Bernsteinsäure oder höherer Homologe, Terephthalsäure oder Isophthalsäure oder auch Cyanurhalogenid und Derivate davon verwendet.

3. Lagerstabile, flüssige Farbstoffpräparation enthaltend eine Verbindung der Formel I definiert in Anspruch 1 in Form eines wasserlöslichen Säureadditionssalzes oder als quaternäres Ammoniumsalz.

4. Wasserlösliche, feste, granulierte Farbstoffpräparation enthaltend eine Verbindung der Formel I definiert in Anspruch 1 in Form eines wasserlöslichen Säureadditionssalzes oder als quaternäres Ammoniumsalz.

5. Verwendung der Verbindungen der Formel I definiert in Anspruch 1 in Form eines wasserlöslichen Säureadditionssalzes oder als quaternäres Ammoniumsalz zum Färben oder Bedrucken von Papier oder Leder.

6. Verwendung der Verbindungen der Formel I definiert in Anspruch 1 in Form eines wasserlöslichen Säureadditionssalzes oder als quaternäres Ammoniumsalz zum Färben oder Bedrucken von Textilien, die aus Zellulosematerial bestehen oder diese enthalten.

**Claims** (for the Contracting States : BE, CH, DE, FR, IT, LI, NL, SE)

1. Basic and/or cationic group-containing sulphonic acid-free dis-, tris- or tetrakisazo compounds of formula I

$$(Z)_n \left[ \overset{(Z_z)_b}{D_I}-(N=N-K_I)_m\, N=N-K_{II}-Y-K_{II}-N=N-(K_I-N=N)_m \overset{(Z_z)_b}{D_I} \right] \qquad \text{(I)}$$

in which

each $D_I$ independently is a residue of a diazo component of unsubstituted or substituted aniline or naphthylamine series ;

each $K_I$ independently is a residue of a coupling/diazo component of unsubstituted or substituted aniline or naphthylamine series ;

each $K_{II}$ independently is a residue of a coupling component of unsubstituted or substituted aniline or naphthylamine series ;

each m independently is 0 or 1 ;

Y is a bridging group that is attached to the optionally substituted amino group that is attached to the optionally substituted amino group of each group $K_{II}$ and does not have two end alkylene groups,

n is at least 1 ;

b is 0, 1 or 2 ;

each Z independently has one of the following definitions

i)

$-CO-X$, $-SO_2-X$; 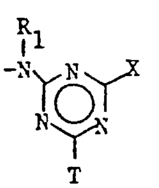 or 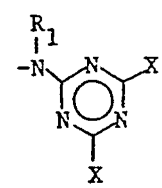 ;

ii) as a cationic group

$-CO(CH_2)_a\overset{\oplus}{N}(R_8)_3A^{\ominus}$; $-NHCO(CH_2)_a\overset{\oplus}{N}(R_8)_3A^{\ominus}$,

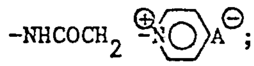 ; $-NHNHCOCH_2\overset{\oplus}{N}(R_8)_3A^{\ominus}$ or

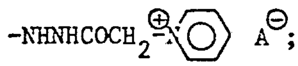 ;

iii) as a basic group

$—CO(CH_2)_aN(R_8)_2$, $—NHCO(CH_2)_aN(R_8)_2$ or $—NHNHCOCH_2N(R_8)_2$,

in which

$R_1$ is hydrogen or $C_{1-4}$alkyl,

T is halogen, hydroxy, $—NH_2$, an aliphatic or aromatic amine or a saturated heterocyclic amine residue, in which the N-atom is incorporated in the heterocycle ;

each X independently is a basic group $—NR_2—Q—NR_3R_4$ or a cationic group $—NR_2—Q—\overset{\oplus}{N}R_5R_6R_7\ A^{\ominus}$ ;

Q is linear or branched $C_{2-6}$alkylene or $—NHCOCH_2—$,

$R_2$ is hydrogen or $C_{1-4}$alkyl ;

$R_3$ and $R_4$ independently of one another are hydrogen, unsubstituted $C_{1-6}$alkyl, $C_{2-6}$alkyl substituted vy hydroxy or cyano, phenyl-$C_{1-3}$alkyl, the phenyl group of which can be substituted by 1 to 3 substituents selected from chloro, $C_{1-4}$alkyl and $C_{1-4}$alkoxy ; $C_{5-6}$cycloalkyl unsubstituted or substituted by 1 to 3 $C_{1-4}$alkyl groups ; or

$R_3$ and $R_4$ together with the N-atom to which they are attached form a 5- or 6-membered unsaturated or saturated ring, optionally containing in the ring a further heteroatom,

$R_5$ and $R_6$ independently have one of the significances of $R_3$ and $R_4$ except hydrogen ; and

$R_7$ is $C_{1-4}$alkyl or benzyl or

$R_5$, $R_6$ and $R_7$ together with the N-atom to which they are attached form a pyridinium cation optionally substituted by 1 or 2 methyl groups,

a is 1, 2 or 3,

$R_8$ is $C_{1-4}$alkyl ; and

$A^{\ominus}$ is a non-chromophoric anion ; and

each $Z_z$ independently is the group

$-(CH_2)_a\overset{\oplus}{N}(R_8)_3\ A^{\ominus}$, 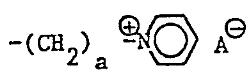 or $-\overset{\oplus}{N}(R_8)_3\ A^{\ominus}$.

where a, $R_8$ and $A^{\ominus}$ are as defined above,
acid addition salts of the compounds of formula I and mixtures thereof.

2. Compounds according to Claim 1 in which Z is a group Za or Zb

Za has the significance $—COXa$, $—COXj\ A^{\ominus}$ ; $—SO_2Xa$ ; $—CO(CH_2)_aN(C_{1-2}alkyl)_2$ or $—COCH_2\overset{\oplus}{N}(CH_3)_3\ A^{\ominus}$ and

Zb has the significance

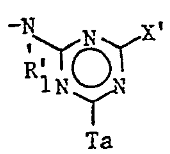 ; 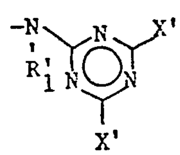 ;

$-NHCOCH_2N(C_{1-2}\text{-Alkyl})_2$, $-NHCOCH_2\overset{\oplus}{N}(CH_3)_3\ A^{\ominus}$ or

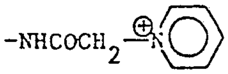 ,

in which X' has the significance of Xa or Xj $A^{\ominus}$,

$X_a$ is

$-NR_2'-Q-NR_3'R_4'$ and Xj $-NH-(CH_2)_{2-3}-\overset{\oplus}{N}(CH_3)_3$ or 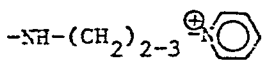 ,

$R_2'$ is hydrogen or methyl ;

Q is as defined in Claim 1 ;

$R_3'$ and $R_4'$ independently of one another are selected from hydrogen, linear or branched $C_{1-6}$alkyl, unbranched hydroxy-$C_{2-3}$-alkyl or benzyl or $R_3'$ and $R_4'$ together with the N-atom to which they are attached form a pyrrolidine, piperidine or morpholine ring ;

$A^{\ominus}$ is a non-chromophoric anion ;

$R_1'$ is hydrogen or methyl,

Ta is Cl, OH, $NH_2$, mono($C_{1-4}$)alkylamino, monohydroxy($C_{2-4}$)alkylamino, di($C_{1-2}$)alkylamino, bis[hydroxy($C_{2-4}$)alkyl]-amino, anilino or morpholino and a is 1, 2 or 3.

3. Compounds according to Claim 1 in which Y is Ya where Ya is a divalent group

$-CO-$, $-COCH{=}CHCO-$, $-CO(CH_2)_2$ or $_3CO-$, 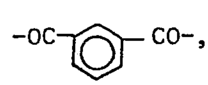

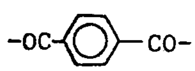 or 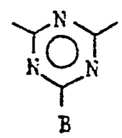

and B has a significance of T or X as defined in Claim 1.

4. Compounds according to Claim 1 in which each $D_I$ independently is an aniline group, the phenyl group of which is unsubstituted or substituted by one or two substituents selected from halogen, $C_{1-4}$alkyl, $C_{1-4}$alkoxy, mono-($C_{1-4}$alkyl)amino, di-($C_{1-4}$alkyl)amino, phenoxy, —NHCO($C_{1-4}$alkyl), —NHCO-phenyl, —$SO_2$($C_{1-4}$alkyl), —$SO_2$-phenyl, —$SO_2N(R_9)_2$ and —$CON(R_9)_2$, in which each $R_9$ independently is hydrogen or $C_{1-4}$alkyl, and which additionally is substituted by 1 or 2 groups Z defined in Claim 1 ; or is a naphthylamine group, the naphthyl group of which is unsubstituted or is substituted by 1 or 2 Z groups having the significance —$SO_2X$, in which X is as defined in Claim 1.

5. Compounds according to Claim 1 in which $K_I$ and $K_{II}$ independently of one another are a group of formula (c) or (d)

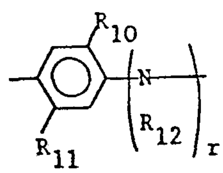

(c)

or

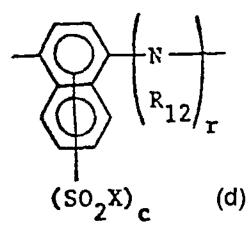

(d)

in which when group (c) or group (d) is a $K_{II}$ group, r = 1 and when group (c) or (d) is a $K_I$ group r = 0 ;

$R_{10}$ is hydrogen, $C_{1-4}$alkyl or $C_{1-4}$alkoxy ;

$R_{11}$ is hydrogen, halogen, $C_{1-4}$alkyl, $C_{1-4}$alkoxy, —NHCO($C_{1-4}$alkyl), —$NHCONH_2$ or the group Zb ;

$R_{12}$ is hydrogen or $C_{1-4}$alkyl and

c is 0, 1 or 2 ; and

Zb is as defined in Claim 2.

6. Compounds according to Claim 1 of formula Ia

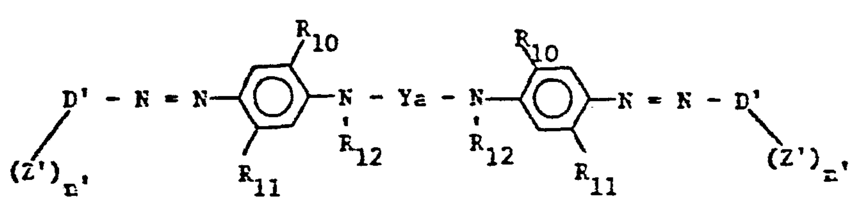

(Ia)

in which each

Z′ independently is a group Za or Zb ;
each n′ independently is 1 or 2 ;
Ya is as defined in Claim 3 ;
$R_{10}$, $R_{11}$ and $R_{12}$ are as defined in Claim 5 ;
Za and Zb are as defined in Claim 2 ;
D′ is unsubstituted phenyl, phenyl substituted by 1 or 2 substituents selected from halogen, $C_{1-4}$alkyl and $C_{1-4}$alkoxy ; or 1- or 2-naphthyl in which the Z′ group is $-SO_2Xa$ where Xa is as defined in Claim 2.

7. Compounds according to Claim 1 of formula Ib

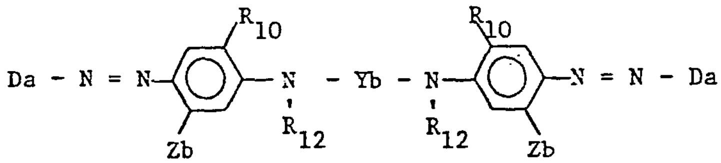
(Ib)

in which

$R_{10}$ and $R_{12}$ are as defined in Claim 5 ;
Zb is as defined in Claim 2 ;
Yb is

-CO-, -COCH=CHCO-, $-COCH_2CH_2CO-$, 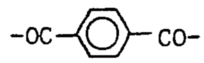 or 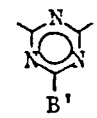

in which B′ has a significance of Ta or is Xb or Xj $A^{\ominus}$, where

Ta, Xj and $A^{\ominus}$ are as defined in Claim 2 ;
Xb is $-NR_2'-Q'-NR_3''R_4''$ ;
$R_2'$ is hydrogen or methyl ;
Q′ is linear or branched $C_{2-6}$alkylene ;
$R_3''$and $R_4''$ independently of one another are hydrogen, linear or branched $C_{1-4}$alkyl or 2-hydroxyethyl or together with the N-atom to which they are attached form a piperidine or morpholine ring ; and
Da is a group of formula (a) or (b),

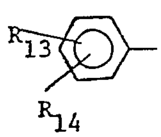 (a) or 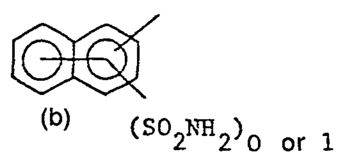

in which

$R_{13}$ is hydrogen, halogen, $C_{1-4}$alkyl, $C_{1-4}$alkoxy, phenoxy, $-NHCO(C_{1-4}alkyl)$, —NHCO-phenyl, $-SO_2(C_{1-4}alkyl)$, $-SO_2$-phenyl, $-SO_2N(R_9)_2$ or $-CON(R_9)_2$ where $R_9$ is hydrogen or $C_{1-4}$-alkyl and
$R_{14}$ is hydrogen, halogen, $C_{1-4}$alkyl or $C_{1-4}$alkoxy.

8. A compound according to Claim 1 of formula Ic

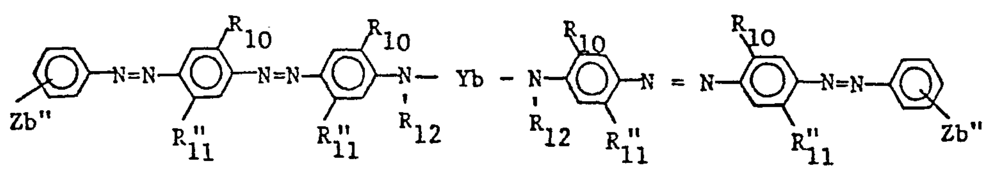
(Ic)

in which each

Zb″ independently is

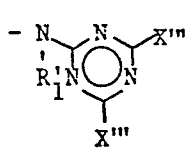 , $-NHCOCH_2\overset{\oplus}{N}(CH_3)_3\ A^{\ominus}$ or 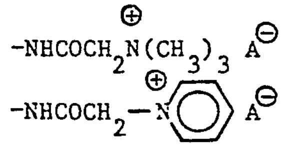

X''' is Xc or Xj $A^{\ominus}$ ;
Xc is $—NR_2'—(CH_2)_{2\text{-}6}—NR_3''R_4''$ ;
$R_1'$ $R_2'$ Xj and $A^{\ominus}$ are as defined in Claim 2 ;
$R_3''$, $R_4''$ and Yb are as defined in Claim 7 ;
$R_{11}''$ is hydrogen, methyl, methoxy, $—NHCOCH_3$, $—NHCONH_2$ or Zb'' and
$R_{10}$ and $R_{12}$ are as defined in Claim 5.

9. A process for the preparation of compounds of formula I defined in Claim 1 characterised by condensing a compound of formula II

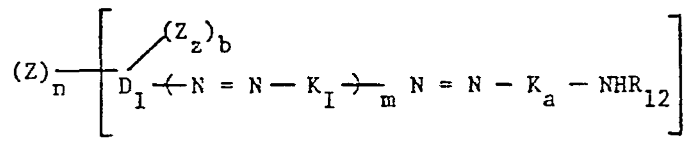 (II)

where Z, $Z_z$, $D_I$, $K_I$, m, n and b are as defined in Claim 1 and $R_{12}$ is hydrogen or $C_{1\text{-}4}$alkyl and the group $K_a—NR_{12}—$ has the significance of $K_{II}$ as defined in Claim 1, and a further compound of formula II which may be the same or different with a bridge Y yielding compound so that the bridge is attached to the amino groups.

10. A storage stable, fluid dyestuff preparation containing a compound according to any one of Claims 1 to 8 in the form of a water soluble acid addition salt or a quaternary ammonium salt.

11. A water soluble, solid, granulated dyestuff preparation containing a compound according to any one of Claims 1 to 8 in the form of a water soluble acid addition salt or a quaternary ammonium salt.

12. A process for dyeing or printing of substrates consisting of or containing paper, cotton or leather characterised by dyeing or printing with a compound according to any one of Claims 1 to 8 in water soluble acid addition salt form or in quaternary ammonium salt form.

**Claims** (for the Contracting State AT)

1. A process for the preparation of basic and/or cationic group-containing sulphonic acid-free dis-, tris- or tetrakisazo compounds of formula I

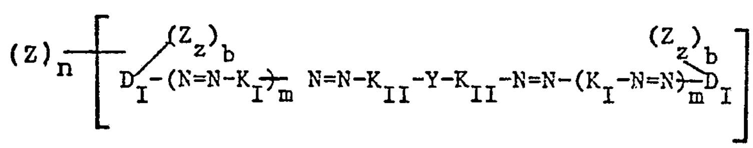 (I)

in which

each $D_I$ independently is a residue of a diazo component on unsubstituted or substituted aniline or naphthylamine series ;

each $K_I$ independently is a residue of a coupling/diazo component of unsubstituted or substituted aniline or naphthylamine series ;

each $K_{II}$ independently is a residue of a coupling component of unsubstituted or substituted aniline or naphthylamine series ;

each m independently is 0 or 1 ;

Y is a bridging group that is attached to the optionally substituted amino group of each group $K_{11}$ and does not have two end alkylene groups,

n is at least 1 ;

b is 0, 1 or 2 ;

each Z independently has one of the following definitions

i)

$-CO-X$, $-SO_2-X$; 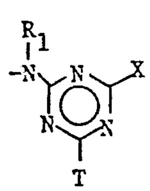 or 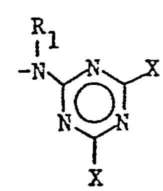 ;

ii) as a cationic group

$$-CO(CH_2)_a\overset{\oplus}{N}(R_8)_3A^{\ominus};\ -NHCO(CH_2)_a\overset{\oplus}{N}(R_8)_3A^{\ominus},$$

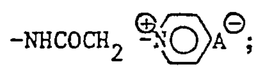; $-NHNHCOCH_2\overset{\oplus}{N}(R_8)_3A^{\ominus}$ or

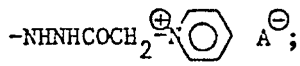;

iii) as a basic group

$$-CO(CH_2)_aN(R_8)_2,\ -NHCO(CH_2)_aN(R_8)_2 \text{ or } -NHNHCOCH_2(R_8)_2,$$

in which

$R_1$ is hydrogen or $C_{1-4}$ alkyl,

T is halogen, hydroxy, $-NH_2$, an aliphatic or aromatic amine or a saturated heterocyclic amine residue, in which the N-atom is incorporated in the heterocycle ;

each X independently is a basic group $-NR_2-Q-NR_3R_4$ or a cationic group $-NR_2-Q-N^{\oplus}R_5R_6R_7$ $A^{\ominus}$ ;

Q is linear or branched $C_{2-6}$alkylene or $-NHCOCH_2-$,

$R_2$ is hydrogen or $C_{1-4}$alkyl ;

$R_3$ and $R_4$ independently of one another are hydrogen, unsubstituted $C_{1-6}$alkyl, $C_{2-6}$alkyl substituted by hydroxy or cyano, phenyl-$C_{1-3}$alkyl, the phenyl group of which can be substituted by 1 to 3 substituents selected from chloro, $C_{1-4}$alkyl and $C_{1-4}$alkoxy ; $C_{5-6}$cycloalkyl unsubstituted or substituted by 1 to 3 $C_{1-4}$alkyl groups ; or

$R_3$ and $R_4$ together with the N-atom to which they are attached form a 5- or 6-membered unsaturated or saturated ring, optionally containing in the ring a further heteroatom,

$R_5$ and $R_6$ independently have one of the significances of $R_3$ and $R_4$ except hydrogen ; and

$R_7$ is $C_{1-4}$alkyl or benzyl or

$R_5$, $R_6$ and $R_7$ together with the N-atom to which they are attached form a pyridinium cation optionally substituted by 1 or 2 methyl groups,

a is 1, 2 or 3,

$R_8$ is $C_{1-4}$alkyl ; and

$A^{\ominus}$ is a non-chromophoric anion ; and

each $Z_z$ independently is the group

$-(CH_2)_a\overset{\oplus}{N}(R_8)_3\ A^{\ominus}$, 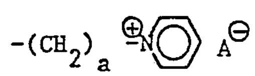 or $-\overset{\oplus}{N}(R_8)_3\ A^{\ominus}$

where a, $R_8$ and $A^{\ominus}$ are as defined above,
acid addition salts of the compounds of formula I and mixtures thereof, characterised by condensing a compound of formula II

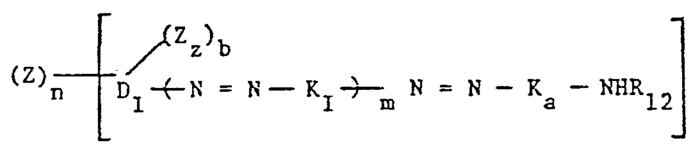
(II)

where

Z, $Z_z$, $D_I$, $K_I$, m, n and b are as defined above and

$R_{12}$ is hydrogen or $C_{1-4}$alkyl and the group $K_a-NR_{12}-$ has the significance of $K_{II}$ as defined above, **and a further compound of formula II which may be the same or different with a bridge Y yielding compound so that the bridge is attached to the amino groups.**

2. A process according to Claim 1 characterised by employing acid dihalides for a bridge Y yielding compounds such as phosgene, the dichlorides of fumaric acid, oxalic acid, malonic acid, succinic acid or higher homologues, terephthalic acid or isophthalic acid or cyanuric halide and derivatives thereof.

3. A storage stable, fluid dyestuff preparation containing a compound of formula I defined in Claim 1, in the form of a water soluble acid addition salt or a quaternary ammonium salt.

4. A water soluble, solid, granulated dyestuff preparation containing a compound of formula I

defined in Claim 1, in the form of a water soluble acid addition salt or a quaternary ammonium salt.

5. Use of a compound of formula I defined in Claim 1, in the form of a water soluble acid addition salt or a quaternary ammonium salt for dyeing or printing of paper or leather.

6. Use of a compound of formula I defined in Claim 1, in the form of a water soluble acid addition salt or a quaternary ammonium salt for dyeing or printing of textiles consisting of or containing cellulosic material.

**Revendications** (pour les Etats contractants : BE, CH, DE, FR, IT, LI, NL, SE)

1. Composés dis-, tris- ou tétrakisazoïques exempts de groupes sulfo, contenant des groupes basiques et/ou cationiques, qui correspondent à la formule I

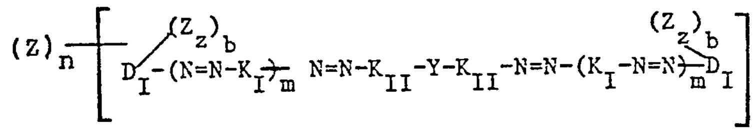
(I)

dans laquelle

les symboles $D_I$ en tant que restes d'une composante de diazotation signifient, indépendamment l'un de l'autre, un reste d'aniline ou de naphtylamine non substitué ou substitué,

les symboles $K_I$ en tant que restes d'une composante de copulation/diazotation signifient, indépendamment l'un de l'autre, un reste d'aniline ou de naphtylamine non substitué ou substitué et

les symboles $K_{II}$ en tant que restes d'une composante de copulation signifient, indépendamment l'un de l'autre, un reste d'aniline ou de naphtylamine non substitué ou substitué ;

les symboles m, indépendamment l'un de l'autre, signifient 0 ou 1 ;

Y représente un élément pont qui est lié au groupe amino éventuellement substitué de chacun des restes $K_{II}$ autrement que par l'intermédiaire de deux groupes alkylène terminaux ;

n signifie au moins 1 et

b signifie 0, 1 ou 2 ;

les symboles Z, indépendamment l'un de l'autre, ont l'une des significations suivantes

i)

$-CO-X$, $-SO_2-X$; 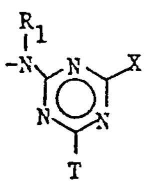 ou 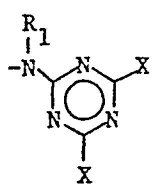 ;

ii) en tant que groupes cationiques

$-CO(CH_2)_a\overset{\oplus}{N}(R_8)_3A^{\ominus}$; $-NHCO(CH_2)_a\overset{\oplus}{N}(R_8)_3A^{\ominus}$,

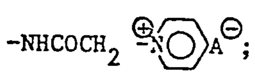 ; $-NHNHCOCH_2\overset{\oplus}{N}(R_8)_3A^{\ominus}$ ou

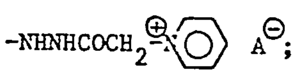 ;

iii) en tant que groupes basiques

$-CO(CH_2)_aN(R_8)_2$, $-NHCO(CH_2)_aN(R_8)_2$ ou $-NHNHCOCH_2N(R_8)_2$,

dans lesquels

$R_1$ représente l'hydrogène ou alkyle en $C_1$-$C_4$,

T représente un halogène, hydroxy, $NH_2$, un reste d'amine aliphatique ou aromatique ou un reste d'amine hétérocyclique saturée dans laquelle l'atome d'azote est inclu dans l'hétérocycle,

les symboles X, indépendamment l'un de l'autre, signifient un groupe basique $-NR_2-Q-NR_3R_4$ ou un groupe cationique $-NR_2-Q-\overset{\oplus}{N}R_5R_6R_7\ A^{\ominus}$,

Q signifie alkylène en $C_2$-$C_6$ linéaire ou ramifié ou $—NHCOCH_2—$,

$R_2$ signifie l'hydrogène ou alkyle en $C_1$-$C_4$,

$R_3$ et $R_4$, indépendamment l'un de l'autre, signifient l'hydrogène, alkyle en $C_1$-$C_6$ non substitué, alkyle en $C_2$-$C_6$ substitué par hydroxy ou cyano, phényl-(alkyle en $C_1$-$C_3$) dont le reste phényle peut être substitué par 1 à 3 substituants choisis parmi le chlore, alkyle en $C_1$-$C_4$ et alcoxy en $C_1$-$C_4$, cycloalkyle en $C_5$-$C_6$ non substitué ou substitué par 1 à 3 groupes alkyle en $C_1$-$C_4$ ou bien

$R_3$ et $R_4$ forment ensemble, avec l'atome d'azote auquel ils sont liés, un cycle saturé ou insaturé à 5 ou 6 chaînons comprenant éventuellement un autre hétéroatome,

$R_5$ et $R_6$, indépendamment l'un de l'autre, ont l'une des significations de $R_3$ et $R_4$ excepté l'hydrogène et

$R_7$ signifie alkyle en $C_1$-$C_4$ ou benzyle ou bien

$R_5$, $R_6$ et $R_7$ forment ensemble, avec l'atome d'azote auquel ils sont liés, un cation pyridinium qui est éventuellement substitué par 1 ou 2 groupes méthyle ;

a signifie 1, 2 ou 3,

$R_8$ représente alkyle en $C_1$-$C_4$ et

$A^{\ominus}$ représente un anion non chromophore et les symboles $Z_2$, indépendamment l'un de l'autre, signifient le groupe

$-(CH_2)_a\overset{\oplus}{N}(R_8)_3\ A^{\ominus}$, 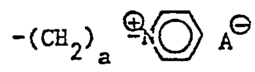 ou $-\overset{\oplus}{N}(R_8)_3\ A^{\ominus}$

dans lesquels a, $R_8$ et $A^{\ominus}$ sont comme définis ci-dessus,

les sels d'addition d'acides des composés de formule I et les mélanges de ces composés.

2. Composés selon la revendication 1, dans lesquels Z signifie un groupe Za ou Zb,

Za représente $—COXa$, $—COXj\ A^{\ominus}$ ; $—SO_2Xa$ ; $—CO(CH_2)_aN$(alkyle en $C_1$-$C_2$)$_2$ ou $—COCH_2\overset{\oplus}{N}(CH_3)_3\ A^{\ominus}$ et

Zb représente

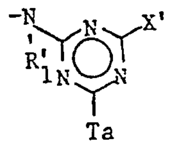 ; 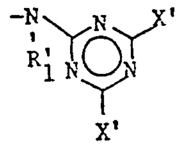 ;

$-NHCOCH_2N$(alkyl) en $C_{1-}C_2)_2$, $-NHCOCH_2\overset{\oplus}{N}(CH_3)_3\ A^{\ominus}$ ou

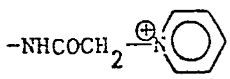 ,

dans lesquels X' signifie Xa ou Xj $A^{\ominus}$,

Xa représente

$-NR_2'-Q-NR_3'R_4'$ et Xj $-NH-(CH_2)_{2-3}-\overset{\oplus}{N}(CH_3)_3$ ou 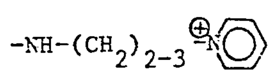 ,

$R_2'$ représente l'hydrogène ou méthyle,

Q est comme défini à la revendication 1,

$R_3'$ et $R_4'$ signifient, indépendamment l'un de l'autre, l'hydrogène, alkyle en $C_1$-$C_6$ linéaire ou ramifié, hydroxyalkyle en $C_2$-$C_3$ non ramifié ou benzyle ou bien

$R_3'$ et $R_4'$ forment ensemble, avec l'atome d'azote auquel ils sont liés, un cycle pyrrolidine, pipéridine ou morpholine ;

$A^{\ominus}$ représente un anion non chromophore,

$R_1'$ représente l'hydrogène ou méthyle,

Ta représente Cl, OH, $NH_2$, mono(alkyl en $C_1$-$C_4$)amino, monohydroxy(alkyl en $C_2$-$C_4$)amino, di(alkyl en $C_1$-$C_2$)-amino, bis[hydroxy(alkyl en $C_2$-$C_4$)]amino, anilino ou morpholino et

a signifie 1, 2 ou 3.

3. Composés selon la revendication 1, dans lesquels Y représente Ya en tant que reste à deux liaisons

$-CO-$, $-COCH=CHCO-$, $-CO(CH_2)_2$ ou $_3CO-$, 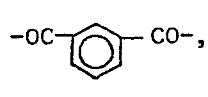, 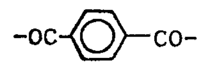 ou

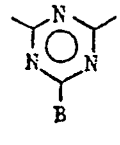

et B a l'une des significations de T ou de X comme défini à la revendication 1.

4. Composés selon la revendication 1, dans lesquels les symboles $D_I$, indépendamment l'un de l'autre, représentent un reste d'aniline dont le reste phényle est non substitué ou substitué par 1 ou 2 substituants choisis parmi les halogènes, alkyle en $C_1$-$C_4$, alcoxy en $C_1$-$C_4$, mono(alkyl en $C_1$-$C_4$)amino, di-(alkyl en $C_1$-$C_4$)amino, phénoxy, —NHCO(alkyle en $C_1$-$C_4$), —NHCO-phényle, —$SO_2$(alkyle en $C_1$-$C_4$), —$SO_2$—phényle, —$SO_2N(R_9)_2$ et —$CON(R_9)_2$, dans lesquels les symboles $R_9$, indépendamment l'un de l'autre, signifient l'hydrogène ou alkyle en $C_1$-$C_4$, et peut porter en plus 1 ou 2 groupes Z définis à la revendication 1, ou un reste de naphtylamine dont le reste naphtyle est non substitué ou porte 1 ou 2 groupes Z signifiant —$SO_2X$ dans lequel X est comme défini à la revendication 1.

5. Composés selon la revendication 1, dans lesquels les restes $K_I$ et $K_{II}$, indépendamment l'un de l'autre, signifient un reste de formule (c) ou (d),

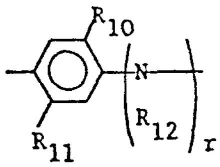

(c)

ou

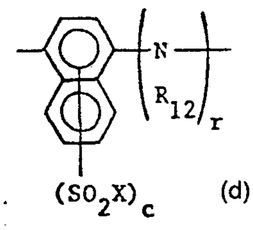

(d)

dans lesquels dans le cas d'un reste $K_{II}$ r = 1 et dans le cas d'un reste $K_I$ r = 0 ;

$R_{10}$ signifie l'hydrogène, alkyle en $C_1$-$C_4$ ou alcoxy en $C_1$-$C_4$ ;

$R_{11}$ signifie l'hydrogène, un halogène, alkyle en $C_1$-$C_4$, alcoxy en $C_1$-$C_4$, —NHCO(alkyle en $C_1$-$C_4$), —$NHCONH_2$ ou le groupe Zb ;

$R_{12}$ signifie l'hydrogène ou alkyle en $C_1$-$C_4$ et

c signifie 0, 1 ou 2 et

Zb est comme défini à la revendication 2.

6. Composés selon la revendication 1, qui correspondent à la formule Ia

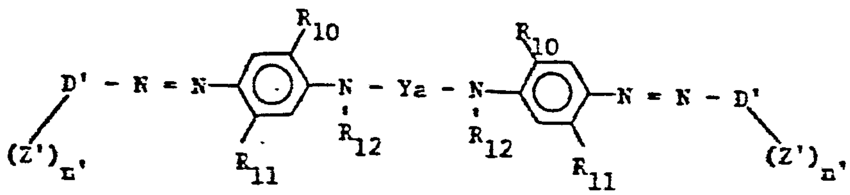

(Ia)

dans laquelle

les symboles Z', indépendamment l'un de l'autre, signifient le groupe Za ou Zb,

les symboles n', indépendamment l'un de l'autre, signifient 1 ou 2,

Ya est comme défini à la revendication 3,

$R_{10}$, $R_{11}$ et $R_{12}$ sont comme définis à la revendication 5,

Za et Zb sont comme définis à la revendication 2 ; et

D' signifie phényle non substitué, phényle substitué par 1 ou 2 substituants choisis parmi les halogènes, alkyle en $C_1$-$C_4$ et alcoxy en $C_1$-$C_4$ ; ou 1- ou 2-naphtyle qui porte, en tant que Z', le groupe —$SO_2$Xa dans lequel Xa est comme défini à la revendication 2.

7. Composés selon la revendication 1, qui correspondent à la formule Ib

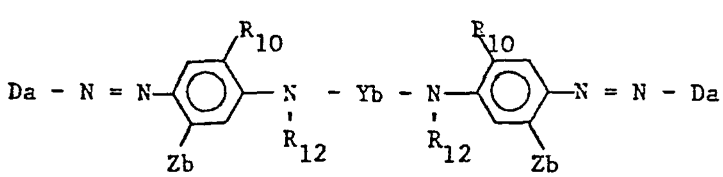

(Ib)

dans laquelle

$R_{10}$ et $R_{12}$ sont comme définis à la revendication 5,

Zb est comme défini à la revendication 2,

Yb signifie

-CO-, -COCH=CHCO-, $-COCH_2CH_2CO-$, 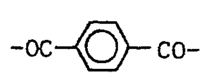 ou 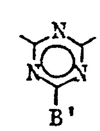

où B' a l'une des significations de Ta ou représente Xb ou Xj $A^{\ominus}$, dans lesquels

Ta, Xj et $A^{\ominus}$ sont comme définis à la revendication 2,

Xb représente $—NR_2'—Q'—NR_3''R_4''$,

$R_2'$ représente l'hydrogène ou méthyle,

Q' représente alkylène en $C_2$-$C_6$ linéaire ou ramifié,

$R_3''$ et $R_4''$, indépendamment l'un de l'autre, représentent l'hydrogène, alkyle en $C_1$-$C_4$ linéaire ou ramifié ou 2-hydroxyéthyle ou forment ensemble, avec l'atome d'azote auquel ils sont liés, un cycle pipéridine ou morpholine, et

Da signifie un reste de formule (a) ou (b)

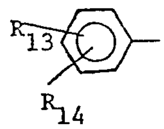 (a) ou 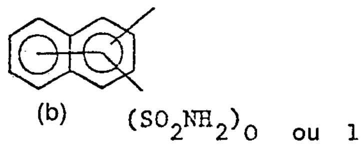 (b)

dans lesquelles

$R_{13}$ représente l'hydrogène, un halogène, alkyle en $C_1$-$C_4$, alcoxy en $C_1$-$C_4$, phénoxy, —NHCO(alkyle en $C_1$-$C_4$), —NHCOphényle, $—SO_2$(alkyle en $C_1$-$C_4$), $—SO_2$phényle, $—SO_2N(R_9)_2$ ou $—CON(R_9)_2$ avec $R_9$ en tant qu'hydrogène ou alkyle en $C_1$-$C_4$ et

$R_{14}$ représente l'hydrogène, un halogène, alkyle en $C_1$-$C_4$ ou alcoxy en $C_1$-$C_4$.

8. Composés selon la revendication 1, qui correspondent à la formule Ic

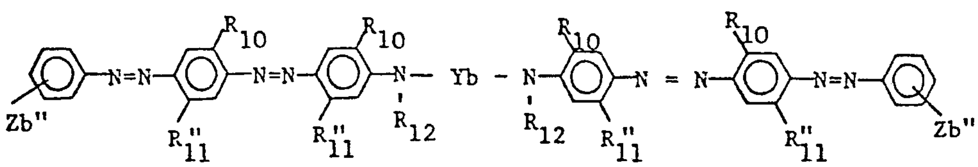 (Ic)

dans laquelle

les symboles Zb", indépendamment l'un de l'autre, représentent

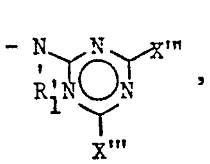 , $-NHCOCH_2\overset{\oplus}{N}(CH_3)_3$ $A^{\ominus}$ ou 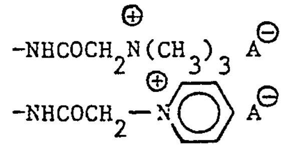

X''' représente Xc ou Xj $A^{\ominus}$,

Xc représente $—NR_2'—(CH_2)_{2\text{-}6}—NR_3''R_4''$,

$R_1'$, $R_2'$, Xj et $A^{\ominus}$ sont comme définis à la revendication 2,

$R_3''$, $R_4''$ et Yb sont comme définis à la revendication 7,

$R_{11}''$ représente l'hydrogène, méthyle, méthoxy, $—NHCOCH_3$, $—NHCONH_2$ ou Zb" et

$R_{10}$ et $R_{12}$ sont comme définis à la revendication 5.

9. Procédé de préparation des composés de formule I définis à la revendication 1, caractérisé en ce qu'on condense par l'intermédiaire des groupes amino un composé de formule II,

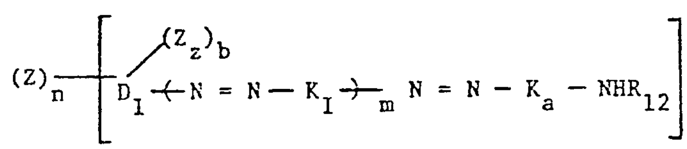 (II)

dans laquelle Z, $Z_z$, $D_I$, $K_I$, m, n et b sont comme définis à la revendication 1, $R_{12}$ signifie l'hydrogène ou alkyle en $C_1$-$C_4$ et le reste $K_a—NR_{12}—$ signifie le reste $K_{II}$ défini à la revendication 1, et un autre composé de formule II, qui peut être identique ou différent, avec un composé introduisant le pont Y.

10. Préparation tinctoriale liquide, stable au stockage, contenant un composé selon l'une des revendications 1 à 8 sous forme d'un sel d'addition d'acide soluble dans l'eau ou comme sel d'ammonium quaternaire.

11. Préparation tinctoriale solide sous forme de granulés, soluble dans l'eau, contenant un composé selon l'une des revendications 1 à 8 sous forme d'un sel d'addition d'acide soluble dans l'eau ou comme sel d'ammonium quaternaire.

12. Procédé de teinture ou d'impression de substrats constitués de papier, de coton ou de cuir ou qui en contiennent, caractérisé en ce qu'on teint ou imprime avec un composé selon l'une des revendications 1 à 8 sous forme d'un sel d'addition d'acide soluble dans l'eau ou comme sel d'ammonium quaternaire.

**Revendications** (pour l'Etat contractant AT)

1. Procédé de préparation de composés dis-, tris- ou tétrakisazoïques exempts de groupes sulfo, contenant des groupes basiques et/ou cationiques, qui correspondent à la formule I

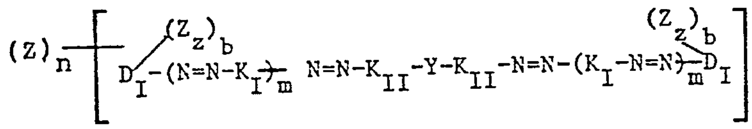 (I)

dans laquelle

les symboles $D_I$ en tant que restes d'une composante de diazotation signifient, indépendamment l'un de l'autre, un reste d'aniline ou de naphtylamine non substitué ou substitué,

les symboles $K_I$ en tant que restes d'une composante de copulation/diazotation signifient, indépendamment l'un de l'autre, un reste d'aniline ou de naphtylamine non substitué ou substitué et

les symboles $K_{II}$ en tant que restes d'une composante de copulation signifient, indépendamment l'un de l'autre, un reste d'aniline ou de naphtylamine non substitué ou substitué ;

les symboles m, indépendamment l'un de l'autre, signifient 0 ou 1 ;

Y représente un élément pont qui est lié au groupe amino éventuellement substitué de chacun des restes $K_{II}$ autrement que par l'intermédiaire de deux groupes alkylène terminaux ;

n signifie au moins 1 et

b signifie 0, 1 ou 2 ;

les symboles Z, indépendamment l'un de l'autre, ont l'une des significations suivantes

i)

$-CO-X$, $-SO_2-X$; 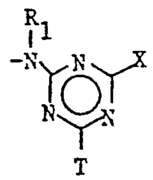 ou 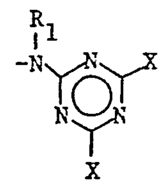 ;

ii) en tant que groupes cationiques

$-CO(CH_2)_a\overset{\oplus}{N}(R_8)_3 A^{\ominus}$; $-NHCO(CH_2)_a\overset{\oplus}{N}(R_8)_3 A^{\ominus}$,

$-NHCOCH_2$ 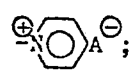; $-NHNHCOCH_2\overset{\oplus}{N}(R_8)_3 A^{\ominus}$ ou

$-NHNHCOCH_2$ 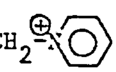 $A^{\ominus}$;

iii) en tant que groupes basiques

$-CO(CH_2)_aN(R_8)_2$, $-NHCO(CH_2)_aN(R_8)_2$ ou $-NHNHCOCH_2N(R_8)_2$,

dans lesquels

$R_1$ représente l'hydrogène ou alkyle en $C_1$-$C_4$,

T représente un halogène, hydroxy, $NH_2$, un reste d'amine aliphatique ou aromatique ou un reste d'amine hétérocyclique saturée dans laquelle l'atome d'azote est inclu dans l'hétérocycle,

les symboles X, indépendamment l'un de l'autre, signifient un groupe basique $-NR_2-Q-NR_3R_4$ ou un groupe cationique $-NR_2-Q-\overset{\oplus}{N}R_5R_6R_7\ A^{\ominus}$,

Q signifie alkylène en $C_2$-$C_6$ linéaire ou ramifié ou $-NHCOCH_2-$,

$R_2$ signifie l'hydrogène ou alkyle en $C_1$-$C_4$,

$R_3$ et $R_4$, indépendamment l'un de l'autre, signifient l'hydrogène, alkyle en $C_1$-$C_6$ non substitué, alkyle en $C_2$-$C_6$ substitué par hydroxy ou cyano, phényl-(alkyle en $C_1$-$C_3$) dont le reste phényle peut être substitué par 1 à 3 substituants choisis parmi le chlore, alkyle en $C_1$-$C_4$ et alcoxy en $C_1$-$C_4$, cycloalkyle en $C_5$-$C_6$ non substitué ou substitué par 1 à 3 groupes alkyle en $C_1$-$C_4$, ou bien

$R_3$ et $R_4$ forment ensemble, avec l'atome d'azote auquel ils sont liés, un cycle saturé ou insaturé à 5 ou 6 chaînons comprenant éventuellement un autre hétéroatome,

$R_5$ et $R_6$, indépendamment l'un de l'autre, ont l'une des significations de $R_3$ et $R_4$ excepté l'hydrogène et

$R_7$ signifie alkyle en $C_1$-$C_4$ ou benzyle ou

$R_5$, $R_6$ et $R_7$ forment ensemble, avec l'atome d'azote auquel ils sont liés, un cation pyridinium qui est éventuellement substitué par 1 ou 2 groupes méthyle ;

a signifie 1, 2 ou 3,

$R_8$ représente alkyle en $C_1$-$C_4$ et

$A^{\ominus}$ représente un anion non chromophore et

les symboles $Z_z$, indépendamment l'un de l'autre, signifient le groupe

$-(CH_2)_a\overset{\oplus}{N}(R_8)_3\ A^{\ominus}$, $-(CH_2)_a$ 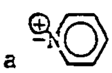 $A^{\ominus}$ ou $-\overset{\oplus}{N}(R_8)_3\ A^{\ominus}$

dans lesquels a, $R_8$ et $A^{\ominus}$ sont comme définis ci-dessus,
ainsi que des sels d'addition d'acides des composés de formule I et des mélanges de ces composés, caractérisé en ce qu'on condense par l'intermédiaire des groupes amino un composé de formule II

$$(Z)_n\!-\!\left[\overset{(Z_z)_b}{D_I}\!-\!\!(N = N - K_I)\!\!-_m N = N - K_a - NHR_{12}\right] \qquad (II)$$

dans laquelle

Z, $Z_z$, $D_I$, $K_I$, m, n et b sont comme définis ci-dessus,

$R_{12}$ signifie l'hydrogène ou alkyle en $C_1$-$C_4$ et le reste $K_a$—$NR_{12}$— signifie le reste $K_{II}$ défini ci-dessus,

et un autre composé de formule II, qui peut être identique ou différent, avec un composé introduisant le pont Y.

2. Procédé selon la revendication 1, caractérisé en ce qu'on utilise comme composés introduisant le pont Y, des dihalogénures d'acides tels que le phosgène, le dichlorure de l'acide fumarique, de l'acide oxalique, de l'acide malonique, de l'acide succinique ou d'homologues supérieurs, de l'acide téréphtalique ou de l'acide isophtalique ou également un halogénure de cyanuryle, et des dérivés de ces composés.

3. Préparation tinctoriale liquide, stable au stockage, contenant un composé de formule I défini à la revendication 1 sous forme d'un sel d'addition d'acide soluble dans l'eau ou comme sel d'ammonium quaternaire.

4. Préparation tinctoriale solide sous forme de granulés, soluble dans l'eau, contenant un composé de formule I défini à la revendication 1 sous forme d'un sel d'addition d'acide soluble dans l'eau ou comme sel d'ammonium quaternaire.

5. Utilisation des composés de formule I définis à la revendication 1 sous forme d'un sel d'addition d'acide soluble dans l'eau ou comme sel d'ammonium quaternaire, pour la teinture ou l'impression du papier ou du cuir.

6. Utilisation des composés de formule I définis à la revendication 1 sous forme d'un sel d'addition d'acide soluble dans l'eau ou comme sel d'ammonium quaternaire, pour la teinture ou l'impression de textiles constitués de cellulose ou qui en contiennent.